(19) Europäisches Patentamt
European Patent Office
Office européen des brevets

(11) **EP 3 297 237 A1**

(12) **EUROPEAN PATENT APPLICATION**

(43) Date of publication:
**21.03.2018 Bulletin 2018/12**

(51) Int Cl.:
*H04L 25/03* (2006.01)      *H04L 27/02* (2006.01)
*H04L 27/34* (2006.01)

(21) Application number: **16188800.3**

(22) Date of filing: **14.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Xieon Networks S.à r.l.**
**2633 Senningerberg (LU)**

(72) Inventor: **Stoll, Detlef**
**81369 München (DE)**

(74) Representative: **Lucke, Andreas**
**Boehmert & Boehmert**
**Anwaltspartnerschaft mbB**
**Pettenkoferstrasse 22**
**80336 München (DE)**

(54) **METHOD AND SYSTEM FOR GENERATING AN ADAPTED TRANSMISSION SIGNAL**

(57)    A method for generating an adapted transmission signal comprising the steps of obtaining a channel transfer function defining the spectral transmission through a transmission channel, wherein the channel bandwidth is higher than or equal to the frequency of half a symbol rate of a digital signal, performing a signal processing based on the channel transfer function to provide an adapted transmission signal having a transmission spectrum with an adapted shape and with an adapted spectral position, such that after transmission and demodulation a signal with a baseband spectrum is received, wherein the positive part of the received baseband spectrum is located in a frequency range between zero and the symbol rate and the positive part of a real part of the base-band spectrum of the received signal is stronger central symmetric with respect to the spectrum point at the frequency of half the symbol rate than without performing said signal processing, and such that at least a spectral width of half the symbol rate of the upper or lower sideband and a carrier frequency are located between the upper and lower channel frequency limit.

Fig. 4

**Description**

TECHNICAL FIELD

The present invention is related to communication systems, in particular to the generation of transmission signals to be transmitted in communication systems from a transmitter to a receiver.

BACKGROUND

For the transmission of data or information from a source to a destination the data is typically modulated onto a transmission signal, which may be an optical signal or a radio frequency (RF) signal. After transmission the transmission signal can be received at the destination.

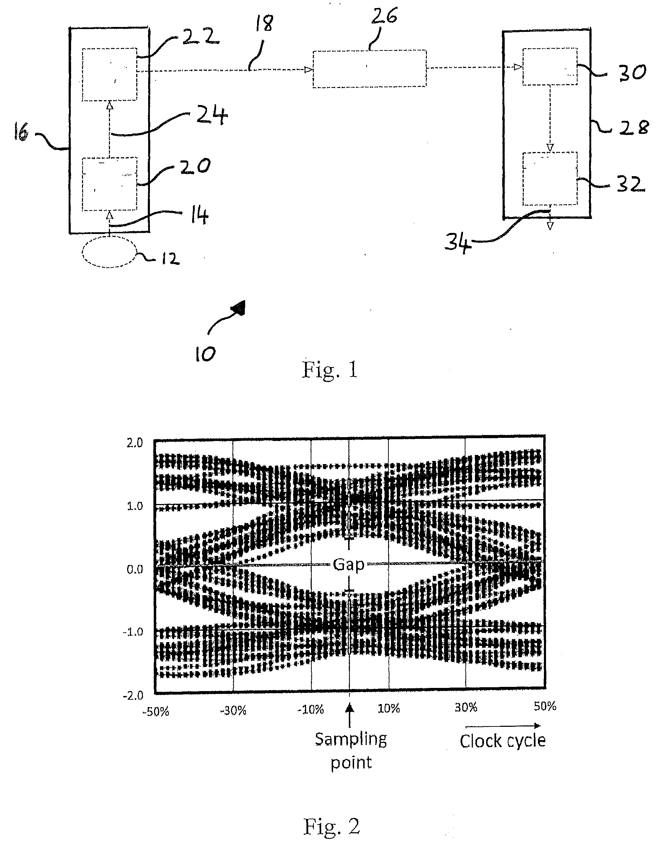

Fig. 1 illustrates a typical example of a communication system 10 for transmitting information or data. The communication system 10 comprises a digital source 12 providing a digital data signal 14 with a corresponding symbol rate and a transmitter 16. The transmitter 16 obtains the digital data signal 14 and generates a transmission signal 18. The transmitter 16 includes a converter 20 and a modulator 22. The converter 20 receives the digital data signal 14 and generates an analog modulation signal 24 to be provided to the modulator 22. The analog modulation signal 24 is used by the modulator 22 to modulate an RF carrier signal or an optical carrier signal being provided by a local oscillator (not shown). The data modulated carrier signal generated by the modulator 22 corresponds to the transmission signal 18.

The communication system 10 further comprises a transmission infrastructure 26 and a receiver 28. The transmission infrastructure 26 provides a transmission channel for the transmission signal 18 and includes a transmission medium, such as one or more optical fibers, and may include one or more optical amplifiers and/or one or more filtering elements, such as wavelength selective switches (WSS) in a dense-wavelength-division-multiplexing (DWDM) transmission system cascaded along a transmission path.

The transmission signal 18 is transmitted from the transmitter 16 via the transmission channel to the receiver 28. The receiver 28 comprises a demodulator 30 for coherently demodulating the transmitted transmission signal 18, modified by the transmission infrastructure 26, into a demodulated analog data signal and a converter 32. The converter 32 performs a sampling of the demodulated analog data signal with the symbol rate in order to provide a received digital data signal 34.

In an ideal case, the received digital data signal 34 provided at the output of the receiver 28 exactly corresponds to the digital data signal 14 provided to the input of the transmitter 12. However, due to crosstalk from neighbor pulses within the demodulated analog data signal, which is also known as inter-symbol interference (ISI), neighbor pulses may not have completely faded when the next pulse is sampled. This interfering of neighbor pulses with the actually sampled pulse can cause bit errors during conversion of the demodulated analog data signal into the received digital data signal 34.

The negative effect of ISI is visualized in the eye diagram or pattern of FIG. 2. The eye pattern illustrates an overlap of signal sections in the time domain of plural sequential clock cycles, wherein consecutive sampling points are located at a common position at the center of the eye pattern. The eye pattern of FIG. 2 corresponds to a signal, which encodes one of the values +1 and -1 at each decision or sampling point. Due to ISI the value at these points does not exactly correspond to one of +1 and -1, but is shifted in vertical direction. This reduces the gap or "eye" between the values that represent both different symbols and can even lead to a wrong decision. Therefore, ISI can cause bit errors.

A typical and widely used modulation technique is amplitude modulation (AM). When modulating the amplitude of a carrier signal the corresponding transmission signal 18 usually comprises a spectrum having an upper side-band above the carrier frequency, i.e. above the frequency of the carrier signal provided by the local oscillator, and a lower side-band below the carrier frequency. In order to transmit the full signal spectrum the corresponding transmission channel must have a channel transfer function, which provides transmittance for each frequency of the signal spectrum. The channel transfer function defines the spectral transmittance, i.e. transmittance per frequency, for the transmission channel.

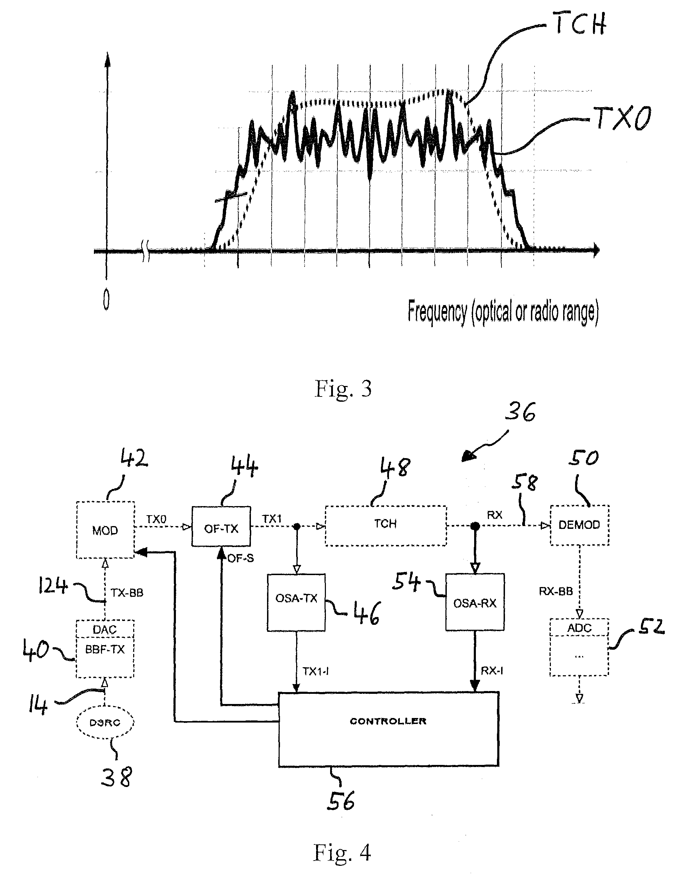

Fig. 3 illustrates a case, in which the channel transfer function TCH has a smaller spectral width than the spectrum TX0 of the transmission signal 18. This may cause that some frequencies of the transmission signal 18 are not transmitted through the transmission channel and may lead to signal degradation and information loss.

A special type of amplitude modulation is vestigial side-band modulation (VSB). In VSB one of the side-bands is suppressed, such that not the complete double side-band spectrum is transmitted.

SUMMARY OF THE INVENTION

The problem to be solved by the present invention is to provide a method and a system, which allow for more robust data transmission with less signal degradation. This problem is solved by the independent claims. Preferred embodiments are defined in the dependent claims.

The present invention relates to a method for generating an adapted transmission signal to be transmitted in a communication system from a transmitter to a receiver via a transmission channel, wherein the transmission channel has a lower and an upper channel frequency limit defining a channel bandwidth, wherein the method comprises the following steps:

- providing a digital data signal with an associated symbol rate,

- converting the digital data signal into an analog modulation signal with a base-band spectrum,

- providing the analog modulation signal to a modulator for modulating the amplitude of a carrier signal to generate a transmission signal at the transmitter, wherein the transmission signal has at least an upper side-band carrying the information of the base-band spectrum or has at least a lower side-band carrying the information of the base-band spectrum,

- obtaining a channel transfer function defining the spectral transmission through the transmission channel between the lower and the upper channel frequency limit, wherein the channel bandwidth is higher than or equal to the frequency of half the symbol rate,

- performing a signal processing at the transmitter based on the channel transfer function to provide an adapted transmission signal having a transmission spectrum with an adapted shape and with an adapted spectral position with respect to the transmission channel, such that

  • after transmission of the adapted transmission signal via the transmission channel and after demodulation of the transmitted adapted transmission signal, a signal with a base-band spectrum is received, wherein

    o the positive part of the base-band spectrum of the received signal is located in a frequency range between zero and the symbol rate and

    o the positive part of a real part of the base-band spectrum of the received signal is stronger central symmetric with respect to the spectrum point at the frequency of half the symbol rate than without performing said signal processing, and such that

  • at least a spectral width of half the symbol rate of the upper side-band and the carrier frequency of the carrier signal are located between the upper and lower channel frequency limit or
  at least a spectral width of half the symbol rate of the lower side-band and the carrier frequency of the carrier signal are located between the upper and lower channel frequency limit.

Due to the above mentioned stronger central symmetry at the receiver, which is generated by signal processing at the transmitter, the received demodulated analog signal can have less ISI as compared to a received demodulated analog signal having a positive real spectrum part which deviates stronger from a central symmetry with respect to the spectrum point at the frequency of half the symbol rate. In case of purely real spectra carrying no phase information, the real part corresponds to the magnitude of the spectrum. When sampling the demodulated analog signal being stronger central symmetric and therefore having less ISI with the symbol rate, a digital signal can be received, which has a reduced bit error rate as compared to less central symmetric signals.

Since the bandwidth of the transmission channel is larger than half the symbol rate and since at least a spectral width of half the symbol rate of one of the side-bands and the carrier frequency is located between the upper and lower channel frequency limit, it is possible to transmit the full information of the digital data signal. According to the Shannon Nyquist Theorem at least a spectral width of half the symbol rate is required for encoding the full information of a digital signal having the symbol rate. Since the information contained in the upper side-band and in the lower side-band of such an amplitude modulated carrier signal both corresponds to the information contained in the base-band and is therefore redundant, a spectral width of half the symbol rate of only one of the side-bands can be sufficient for a transmission without information loss.

As compared to the transmission of conventional vestigial side-band modulated signals which are not generated or processed based on specific properties of the transmission channel, and in particular independently of a channel transfer function, the present invention allows for a reduced ISI and even zero ISI by a processing at the transmitter side. Because the processing is based on the channel transfer function, it is possible to consider the spectral transmission via the transmission channel. Therefore, no additional filtering or frequency selective damping is required at the receiver side for generating a desired symmetry in order to reduce or even avoid ISI. In other words, a filtering or frequency selective damping which may occur during transmission via the transmission channel, can be considered and even contribute to generate the required symmetry after transmission.

Accordingly, the present invention allows generating an adapted transmission signal which can be recovered with reduced ISI without further processing for ISI reduction at the receiver side. Therefore, the present invention allows for a robust transmission with low degradation.

Preferably, said the positive part of a real part of the base-band spectrum of the received signal has a central symmetry or at least approximately a central symmetry with respect to the spectrum point at the frequency of half the symbol rate. If the positive real base-band spectrum part is central symmetric with respect to the spectrum point at half the symbol rate, the demodulated analog signal can be free of ISI and a sampling without degradation due to ISI possible. This can significantly reduce the chance of bit errors. In order to achieve low ISI, the positive real base-band spectrum part must not be exactly central symmetric to the spectrum point at half the symbol rate, but can also be approximately or at least approximately central symmetric. "At least approximately" means that the symmetry may - but must not - deviate to a certain degree from the central symmetry, because also a symmetry which is not exactly central symmetric may allow for a sufficiently low ISI, if the deviation is sufficiently low. In the ideal case of an exactly central symmetric positive base-band spectrum part zero ISI is achievable.

In preferred embodiments the channel bandwidth is lower than twice the bandwidth of the positive part of the base-band spectrum of the analog modulation signal. Because at least a spectral width of half the symbol rate of one of the side-bands of the adapted transmission signal is located within the spectral range between the upper and the lower channel frequency limit the complete base-band information can still be transmitted without information loss in these embodiments. Even though, this bandwidth does not allow to fully transmit the complete spectral width of a conventional unprocessed double side-band amplitude modulated carrier signal, which has a lower side-band and an upper side-band both in the width of the positive part of the base-band spectrum.

Accordingly, as compared to conventional double side-band transmission these embodiments allow to transmit the full signal information via a transmission channel with a smaller bandwidth and therefore allow for a more efficient transmission in combination with a robust transmission with low degradation.

The base-band spectrum of the received signal can have a real part only. In this case an imaginary part does not exist or is zero, such that the spectrum is defined by the real part which represents or corresponds to a magnitude of the spectrum. Alternatively, the base-band spectrum of the received signal can have both an imaginary part and a real part, both defining the spectrum. In this case, both the imaginary part and the real part define a magnitude of the spectrum and both the imaginary part and the real part define a phase of the spectrum. In these embodiments, said signal processing can be further performed, such that that the positive part of the imaginary part of the base-band spectrum has at least approximately an axial symmetry with respect to the spectrum point at the frequency of half the symbol rate ($F_{sym}/2$). In case of complex spectra having spectral phases and magnitudes, this can further reduce ISI. "Axial symmetry" can also be designated as "even symmetry" and "central symmetry" can also be designated as "odd symmetry".

In preferred embodiments, the step of performing a signal processing comprises blocking or at least damping frequencies outside the spectral range of the transmission channel. This allows to restrict the transmission only to the spectral range of the associated transmission channel and to avoid redundant frequencies outside the transmission channel which could interference with other signals propagating on neighboring transmission channels. Hence, this can avoid or reduce signal degradation due to crosstalk. This blocking or damping is preferably performed after modulation, but can also be performed before modulation. It can affect all frequencies outside the spectral range of the channel or only a portion thereof. Further, the frequencies can be completely blocked or only partially.

Preferably the step of performing a signal processing at the transmitter further comprises

- adjusting the carrier frequency to an adapted carrier frequency, such that at least a spectral range of the upper side-band with a width of half the symbol rate and the adapted carrier frequency or at least a spectral range of the lower side-band with a width of half the symbol rate and the adapted carrier frequency are located between the upper and the lower channel frequency limit.

Adjusting the carrier frequency may include a tuning of the carrier frequency for shifting the signal spectrum after modulation.

However, in case the carrier frequency should initially be located at a suitable frequency, a tuning or change of the initial carrier frequency may not be necessary. In these embodiments the carrier frequency is controlled to be at a desired adapted carrier frequency.

In the before mentioned embodiment adjusting the carrier frequency can comprise tuning the carrier frequency from an initial carrier frequency within the transmission channel to an adapted carrier frequency within the transmission channel. This allows obtaining the channel transfer function by transmitting a signal which has been generated with the initial carrier frequency and generating an adapted transmission signal afterwards based on the obtained channel transfer function.

The before mentioned initial carrier frequency can be arranged in the center of the transmission channel and/or the adapted carrier frequency can be located closer to one of the channel frequency limits than to the center frequency of the transmission channel. A modulated carrier signal, such as a double side-band signal, which is generated with a carrier frequency in the center of the transmission channel can cover the complete range of the transmission channel to be used for the transmission of the adapted transmission signal and can be used for obtaining the channel transfer function. An adapted carrier frequency close to a channel frequency limit allows for a small spectral range of the transmission channel down to a width of half the symbol rate, which can still be sufficient to transmit the complete signal information.

In one or more of the before mentioned embodiments the upper and/or the lower channel frequency limit can be predefined spectral positions respectively defining a limit of an allocated frequency slot within a larger transmission spectrum or spectral band and/or can correspond to an edge of a transmission spectrum beyond which the spectral transmission is zero or decreases to zero. Hence the adapted transmission signal can be generated for a predefined frequency slot having bandwidth larger than half the symbol rate and smaller than the initial signal bandwidth. Alternatively or additionally, one or both of the channel frequency limits may correspond to physical transmission limits or boundary.

In one or more of the before mentioned embodiments the adapted transmission signal can be an optical signal, a radio frequency signal or a signal from a digital subscriber line system.

In some embodiments the channel transfer function is obtained based on

- generating an amplitude modulated carrier signal having a spectrum covering at least the spectral range of the transmission channel,

- transmitting or partially transmitting the amplitude modulated carrier signal via the transmission channel,

- measuring the spectrum of the signal portion transmitted via the transmission channel, and

- obtaining a signal spectrum before transmission at the transmitter side.

Hence, the amplitude modulated carrier signal may correspond, for example, to a conventional double side-band modulated carrier signal having a central frequency corresponding to the frequency of the carrier signal being located in the center of the transmission channel. This conventional signal can be used to obtain the channel transfer function. Further, the double side-band modulated carrier signal may be generated based on the same before mentioned digital signal and with the same modulator but without the signal processing being required for generating the adapted transmission signal. Hence the step of "obtaining a channel transfer function" must not be performed after the before mentioned step of "providing a digital data signal" but can be performed before.

In one or more embodiments the signal spectrum before transmission at the transmitter side is obtained by measuring or by a calculation from input parameters. The input parameters may include, for example, one or more of the following parameters: The symbol rate, the carrier frequency, a pulse shape that defines a transition from one symbol to a next symbol, a multiplexing technique, such as polarization multiplexing, phase multiplexing of in-phase and quadrature components that turns AM signals into QAM signals.

In one or more of the before mentioned embodiments the signal processing comprises frequency selective damping after modulation in the spectral range of the transmission channel, which results after transmission and demodulation to an at least approximately central symmetry in the positive part of the real part of the received base-band spectrum or to an at least approximately central symmetry in the positive part of the real part of the received base-band spectrum and to an at least approximately axial symmetry in the positive part of the imaginary part of the received base-band spectrum. In these embodiments the output of the modulator can correspond, for example, to a conventional double side-band modulated carrier signal not being centered with respect to the transmission channel and the required symmetry for zero ISI can be generated by the frequency selective damping.

The frequency selective damping can include applying a filter function, which is determined based on the channel transfer function, wherein the filter function is preferably applied by use of an adaptable filter, such as a configurable RF filter or an optical filter, such a wavelength selective switch which supports flexible DWDM grid functionality. This wavelength selective switch can allow for continuous damping of each frequency slot and can also allow for phase adjustment.

In some embodiments the spectrum shape of the adapted transmission signal in the spectral range of the transmission channel is generated by applying a filter function before modulation. In these embodiments a further filtering of processing of the spectrum shape after modulation must not be necessary but can be performed optionally in addition.

In some embodiments the desired spectrum shape in the spectral range of the transmission channel is generated by filtering both upstream and downstream of the modulator. "Upstream" means "at the input side" of the modulator and "downstream" means "at the output side" of the modulator.

In one or more of the before mentioned embodiments the complete spectral range of the upper side-band or the complete spectral range of the lower side-band is located between the upper and the lower channel frequency limit, and/or the channel bandwidth is lower than 75% of the symbol rate. This makes the transmission more robust against signal loss and/or allows using a comparatively small bandwidth for a transmission.

According to one or more embodiments the method further comprises

- demodulating the transmitted data modulated carrier signal to provide an analog demodulated signal with a base-band spectrum, and/or

- converting the demodulated signal into a received digital signal by using a sampling with the symbol rate.

These steps are not necessary for performing the signal processing at the transmitter, but are necessary for generating a digital signal at the receiver which corresponds or essentially corresponds to the digital signal at the transmitter.

In preferred embodiments modulating comprises one of quadrature amplitude modulation (QAM). QAM may comprise for example one of 4QAM also known as quadrature phase shift keying (QPSK), 8QAM and 16QAM.

In one or more of the before mentioned embodiments demodulating can be performed by use of a QVSB receiver. This component is able to separate non-orthogonal quadrature-phase information (Q-information) and in-phase information (I-information). In conventional QAM-signals which are transmitted with both side-bands the Q- and I-components are orthogonal to each other. Due to its orthogonality these components can be separated with conventional QAM-receivers. If one of the side-bands is not transmitted or only partially transmitted, this orthogonality between the Q- and I-components gets lost and conventional QAM-receivers cannot be used to receive the original information. Because QVSB receivers are able to separate non-orthogonal the Q- and I-components, this component can be used to receive the information of a transmitted adapted transmission signal with non-orthogonal Q- and I-components. In other words, a QVSB receiver is able to separate signal components that belong to the transmitted in-phase signal and the transmitted quadrature signal that appear at the receiver in a mixed manner. That mixing can happen due to the suppression of one side band or parts of it in the transmission filter. Also phase distortion along the transmission infrastructure, such as fiber dispersion, can contribute to phase-shifting signal energy from the in-phase towards the quadrature component and vice versa.

In some embodiments QAM is applied in combination with trellis coded modulation (TCM). In that case, the receiver may comprise a Viterbi decoder.

In one or more of the before mentioned embodiments the signal processing further comprises applying a spectral filter function or frequency dependent amplification which compensates or partially compensates for differences in the spectral transmission through the transmission channel. This can correspond to a pre-emphasis which can ensure equalized or partially equalized signal to noise ratios for different frequencies after transmission. This can contribute to further reduce the degradation or deterioration of the signal. This requirement must not be in contradiction to the symmetry requirement. In case there is a contradiction the equalization may only be performed partially.

The present invention further relates to a communication system for generating an adapted transmission signal, comprising

- a converter for converting a digital data signal with an associated symbol rate into an analog modulation signal with a base-band spectrum,

- a transmission infrastructure connecting a transmitter and a receiver comprising a transmission channel with a lower and an upper channel frequency limit defining a channel bandwidth, wherein the channel bandwidth is higher than or equal to the frequency of half the symbol rate,

- a tunable local oscillator for providing a carrier signal,

- a modulator for modulating the amplitude of the carrier signal to provide a transmission signal,

- an adaptable filter being arranged upstream of the transmission infrastructure for applying a filter function,

- a controller configured for

  - determining a channel transfer function defining the spectral transmission through the transmission channel between the lower and the upper channel frequency limit based on information received from downstream and from upstream of the transmission infrastructure,

- determining an adapted carrier frequency and a filter function based on the channel transfer function,

- controlling the adaptable filter to apply the determined filter function and for controlling the tunable local oscillator to generate a carrier signal with the adapted carrier frequency, such that downstream of the modulator an adapted transmission signal is generated, wherein the adapted transmission signal has a transmission spectrum with an adapted shape and with an adapted spectral position with respect to the transmission channel, such that

- after transmission of the adapted transmission signal via the transmission channel and after a demodulation of the transmitted adapted transmission signal, a signal with a base-band spectrum is received, wherein

o the positive part of the received base-band spectrum is located in a frequency range between zero and the symbol rate and

o the positive part of a real part of the base-band spectrum of the received signal is stronger central symmetric with respect to the spectrum point at the frequency of half the symbol rate than without applying apply the determined filter function (60; $H_1(f)$, $H_2(f)$), and such that

- at least a spectral width of half the symbol rate of the upper side-band and the carrier frequency of the carrier signal are located between the upper and lower channel frequency limit or
at least a spectral width of half the symbol rate of the lower side-band and the carrier frequency of the carrier signal are located between the upper and lower channel frequency limit.

In one or more embodiments the adaptable filter is implemented in the optical, radio or digital subscriber line frequency domain and arranged downstream of the modulator and/or is implemented in the electrical domain and arranged upstream of the modulator.

Hence, the spectral processing can be performed completely by one filter in the optical RF domain or by one filter in the electrical domain. Alternatively, it can be performed by a combination of both.

Preferably the communication system further comprises a first spectrum analyzer arranged downstream of the transmission channel for providing spectral information to the controller. Based on downstream spectrum information the channel transfer function may be determined.

In some embodiments the communication system further comprises a second spectrum analyzer arranged upstream of the transmission channel for providing spectral information to the controller.

In some embodiments the spectral information provided by one or both of the first and second spectrum analyzers corresponds to or encodes a magnitude value per frequency.

In one or more of the before mentioned embodiments the communication system further comprises a digital source for providing the digital data signal to the converter, wherein the controller is connected to the digital source, to the converter and to the modulator for receiving input parameters allowing to determine a signal spectrum upstream of the transmission infrastructure. Hence, the upstream signal spectrum must not necessarily be measured but can also be determined from input parameters.

One or more of the before mentioned communication systems can be configured for performing one or more of the before mentioned methods.

BRIEF DESCRIPTION OF THE DRAWINGS

Further details and advantages of the present invention will become apparent from the following description, in which preferred embodiments are described in detail with reference to the appended drawings, in which:

FIG. 1        shows a conventional communication system.

FIG. 2        shows an eye pattern for a signal being deteriorated by ISI.

FIG. 3        shows the spectrum of a transmission signal and a channel transfer function of a corresponding transmission channel.

FIG. 4        shows a communication system according to first embodiment of the present invention.

FIGS. 5 a),b)     show a base-band spectrum and the positive portion thereof.

FIG. 6            shows a spectrum conversion from the base-band to the optical or RF range due to modulation.

FIG. 7            shows a communication system according to a second embodiment of the present invention.

FIG. 8            shows two spectra which have been generated with different pulse shaping parameters.

FIG. 9            shows a channel transfer function defining the spectral width of a transmission channel together with a spectrum of a transmission signal generated at a transmitter.

FIGS. 10 a),b)   show transmission channels being defined by predefined channel frequency limits within a spectral transmission band.

FIGS. 11 a),b)   illustrate a retuning of a carrier frequency.

FIGS. 12, 13     illustrate the conversion from the optical or RF range to the base-band both for a filter function and for a signal spectrum due to demodulation.

FIGS. 14 a),b)   illustrate a base-band spectrum having a symmetry for zero ISI.

FIG. 15          shows an eye pattern corresponding to a signal not being deteriorated by ISI.

FIGS. 16 a),b)   show impulse response functions with ISI and without ISI, respectively.

FIG. 17          shows a chart with variables for determining a filter function by use of linear programming.

FIG. 18          shows a filter function for zero ISI determined by linear programming and a channel transfer function based on which the filter function has been determined.

FIG. 19          illustrates a communication system according to a third embodiment of the present invention.

FIG. 20          illustrates a converter with a base-band filter.

FIG. 21          illustrates a determined filter function being shifted to the base-band.

FIGS. 22 a),b)   illustrate a decomposition of the shifted filter function of FIG. 21 into its real part and imaginary part, both of which are further decomposed in their even and odd components.

In the drawings same elements are designated with same reference numbers.

DETAILED DESCRIPTION OF PREFERRED EMBODIMENTS

Fig. 4 illustrates a communication system 36 according to an embodiment of the present invention being configured for performing a method according to an embodiment of the present invention. The communication system 36 comprises a digital source 38, a converter 40, a modulator 42, an adaptable filter 44, a second spectrum analyzer 46, a communication or transmission infrastructure 48, a demodulator 50, a converter 52, a first spectrum analyzer 54 and a controller 56.

The modulator 42 comprises a tunable local oscillator (not shown) for providing a carrier signal to be modulated. Alternatively, the tunable local oscillator can be provided outside the modulator 42 and can correspond to a separate component, which provides the carrier signal to the modulator 42.

The adaptable filter 44 is capable for applying a filter function based on a control signal provided by the controller 56, wherein the filter function can be adapted and controlled in response to the control of the controller 56. This allows to adapt or shape the spectrum TX0 of a modulated carrier signal in order to provide an adapted transmission signal corresponding to an adapted modulated carrier signal with an adapted spectrum TX1. The shape of the spectrum TX1 can be determined by the respectively applied filter function and can be controlled by the controller 56. The adaptable filter 44 may be implemented as a configurable RF filter - in case of RF transmission systems - or as configurable optical filter, such a wavelength selective switch (WSS) supporting a flexible DWDM grid functionality - in case of optical transmission systems.

The digital source 38, the converter 40, the modulator 42, the adaptable filter 44 and second spectrum analyzer 46 are arranged at a transmitter site upstream of the transmission infrastructure 48. Some or all of these components are arranged within a common transmitter. The controller 56 may also be a part of the transmitter but can also be arranged outside the transmitter as separate component.

The first spectrum analyzer 54, the demodulator 50 and the converter 52 are arranged at a receiver side downstream of the transmission infrastructure 48. Some or all of these components are part of a receiver for receiving and demodulating a transmitted adapted transmission signal 58.

INITIAL SYSTEM SETTING

In the following the operation of the communication system 36 is explained for an initial system setting, in which the modulator 42 and the adaptable filter 44 are not yet controlled by the controller 56 to be in a setting for generating an adapted transmission signal:

The digital source 38 provides a digital data signal 14 comprising the data to be transmitted to the receiver and having a corresponding symbol rate $F_{sym}$. The symbol rate $F_{sym}$ is the bit rate of the data signal divided by the amount of bits per symbol according to the applied modulation technique and by the number of multiplexing techniques applied. If 16QAM is applied, for example, the amount of bits per symbol is 4. The bit rate may include bits for forward error correction (FEC) and for other overhead.

The converter 40 receives the digital data signal and 14 and generates an analog modulation signal 124 with a base-band spectrum TX-BB. The converter 40 preferably includes a base-band filter BBF-TX which may perform a pulse shaping and a digital-to-analog conversion (DAC). Different types of pulse shaping, such as root-raised cosine (RRC), raised cosine and non-return-to-zero (NRZ), can be applied in different embodiments. In embodiments using RRC spectral shaping the base-band spectrum TX-BB can de described and calculated by the following formula:

$$TX - BB\,(f) = \begin{cases} 1 & ; \quad |f| \le \dfrac{F_{sym}}{2}(1-r) \\[2em] cos\left(\dfrac{\pi}{2r}\left(\dfrac{|f|}{F_{sym}} + r - 1\right)\right) & ; \quad otherwise \\[2em] 0 & ; \quad |f| \ge \dfrac{F_{sym}}{2}(1+r) \end{cases}$$

The parameter r, with $0 \le r \le 1$, corresponds to a roll-off factor and f corresponds to any frequency value in the base band.

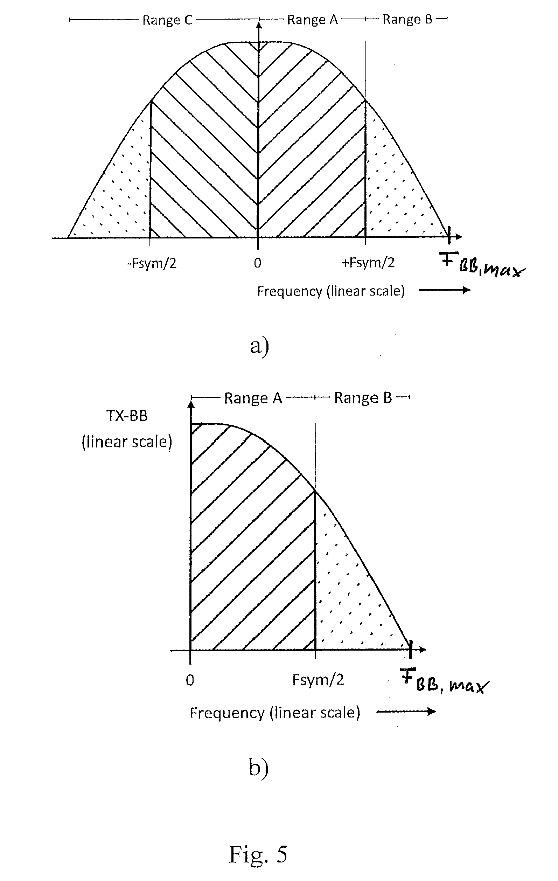

Fig. 5 illustrates an example for a base-band spectrum TX-BB of the analog modulation signal 124, wherein FIG. 5 a) shows the complete base-band spectrum before modulation and FIG. 5 b) shows the positive portion thereof. It is noted that only the positive frequencies of the positive portion of the base-band signal represent the actual, real frequencies which are actually present in the generated analog modulation signal 124, while the negative part of the base-band spectrum having negative frequencies is used according to the conventional complex mathematical description being used for modulation and demodulation. The mathematical description correctly accounts for spectral intensity or magnitude and - in case of complex spectra - for spectral phase information as well as for the transformation between the spectra of base-band signals and the spectra of modulated carrier signals being modulated based on these base-band signals. The spectrum values can be complex for defining and describing a magnitude (M) and a phase (P) for each frequency value - or equivalently - for defining a real part (RE) and an imaginary part (IM) for each frequency value.

In the example of FIG. 5, the imaginary part (Im) of the spectrum is zero, such that the magnitude (which is shown on the y-axis and which is related to a spectral intensity) corresponds to the real part (Re) of the spectrum. In case of Im $\ne$ 0, the magnitude is given by

$$M = \sqrt{Re^2 + Im^2}$$

and the phase is given by

$$P = \tan\left(\frac{Im}{Re}\right).$$

In the mathematical description of real base-band signals, the real part of the base-band spectrum has even symmetry with respect to the vertical axis at the frequency f=0, and the imaginary part of the base-band spectrum has odd symmetry with respect to the origin, i.e. has central symmetry to the origin point (0/0). Accordingly, in the mathematical signal description the positive part of the base-band spectrum (corresponding to "Range A" + "Range B" in FIG. 5 a)) and the negative part of the base-band spectrum (corresponding to "Range C" in FIG. 5a)) carry the same information, and can be derived from each other.

In the present description the term "base-band spectrum" refers to the mathematical description, such that a base-band spectrum can have both a positive and a negative portion - as illustrated in FIG. 5 a). In order to explicitly designate the real spectral properties and the real spectral range of a base-band signal the term "positive portion of a base-band spectrum is used". If phase information is not considered or zero for all frequencies, the base-band spectrum and the positive portion thereof are represented by purely real values corresponding to the spectral magnitude. Otherwise, if non-zero spectral phases are both present and considered spectra can be represented by complex values, e.g. by both a spectral magnitude value distribution and a spectral phase value distribution or by both a spectral distribution of a real part and a spectral distribution of an imaginary part.

According to the Shannon Nyquist Theorem, the analog modulation signal 124 must be generated at least with a bandwidth from zero to $F_{sym}/2$ (as indicated by a "Range A" in FIG. 5 a)) in order to be capable for carrying the complete information of the digital data signal. In theory the additional bandwidth (indicated by a "Range B" in FIG. 5 a)) can be removed completely without losing information. However, practically it is preferred to have at least a certain additional bandwidth in order to increase the robustness against signal degradation and information loss.

The analog modulation signal 124 is fed to and used by the modulator 42 to modulate the amplitude of a carrier signal provided by the tunable local oscillator. In the initial system setting the carrier signal is generated at an initial carrier frequency $F_0$. In some embodiments the carrier signal is an RF signal. In other embodiments the carrier signal is an optical signal.

The modulator 42 performs an amplitude modulation in order to provide a modulated carrier signal in the RF or optical domain with a signal spectrum TX0. An amplitude modulation corresponds to a signal multiplication of the analog modulation signal 124 with the carrier signal. The carrier signal can correspond, for example, to a cosine carrier or to a sine carrier, wherein the cosine function and the sine function can be expressed to be composed of two complex exponential functions:

$$cos(2\pi F_0 t) = \frac{1}{2}\left(e^{+i2\pi F_0 t} + e^{-i2\pi F_0 t}\right)$$

$$sin(2\pi F_0 t) = \frac{1}{2}j\left(e^{-i2\pi F_0 t} - e^{+i2\pi F_0 t}\right)$$

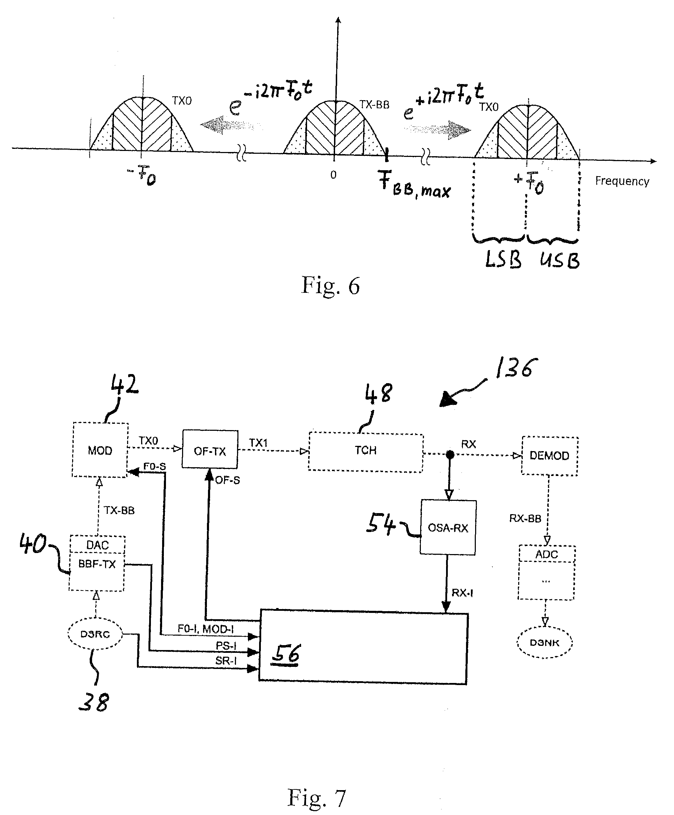

Fig. 6 illustrates the effect of the modulation with a cosine carrier. The signal multiplication with the cosine function shifts the base-band spectrum TX-BB (including its positive and negative part) both to the positive carrier frequency $+F_0$ and to the negative carrier frequency $-F_0$ into the RF or optical domain. Only the TX0 spectrum in the positive frequency range corresponds to the really measureable spectrum of the generated modulated carrier signal downstream the modulator 42. The spectrum in the negative frequency range does not actually exist but is used for the mathematical description.

Referring to FIG. 6, in case of an amplitude modulation with a single cosine carrier or a single sine carrier, the spectrum TX0 of the modulated carrier signal has an upper side-band (USB) ranging from $F_0$ to $F_0 + F_{BB,max}$ and a lower side-band (LSB) ranging from $F_0$ to $F_0 - F_{BB,max}$, wherein $F_{BB,max}$ designates the maximum frequency of the base-band spectrum. The complete information of the base-band spectrum is contained both in the USB and in the LSB. The spectral range of the generated modulated carrier signal ranges from $F_0 - F_{BB,max}$ to $F_0 + F_{BB,max}$ such that the spectrum TX0 of the double side-band modulated carrier signal occupies a bandwidth of $2F_{BB,max}$ corresponding to twice the bandwidth of the positive portion of the base-band spectrum TX-BB, which ranges from 0 to $F_{BB,max}$.

The modulation can be performed with one or more carrier signals. If plural carrier signals are used, the carrier signals can be phase shifted with respect to each other, implementing phase multiplexing. The phase shifted carrier signals can be separately modulated and combined by the modulator. In some embodiments quadrature-amplitude modulation (QAM) is applied, such as 4QAM (also designated as QPSK), 8QAM or 16QAM, for example.

In the initial system setting the adaptable filter 44 is preferably controlled to apply no filtering, i.e. to apply a "neutral" filter function. Accordingly, in the initial system setting the transmission signal outputted by the adaptable filter 44 can correspond to the same signal, which is generated by the modulator 42, such that in the initial system setting the spectra TX0 and TX1 in FIG. 4 can be identical. Accordingly, in the initial system setting a transmission signal with a spectrum TX1 can be generated, wherein TX1 may have a bandwidth of $2F_{BB,max}$, which is typically much larger than the bandwidth of $F_{sym}/2$, which can be sufficient for a transmission without loss of information.

SIGNAL PROCESSING

In the following it is explained how the initial setting of the communication system 36 of FIG. 4 can be adapted in order to perform a signal processing which allows for a more efficient and robust data transmission and reduced signal degradation.

In the embodiment of FIG. 4 this signal processing comprises

- controlling the tunable local oscillator to generate a carrier signal having an adapted carrier frequency $F_{0\_new}$ and

- controlling the adaptable filter 44 to apply a filter function

in order to generate an adapted transmission signal, which allows for a more efficient transmission and for low or zero ISI. The value of $F_{0\_new}$ and the shape of the filter function as well as the application thereof are controlled by the controller 56. The controller 56 further determines the value for $F_{0\_new}$ and the shape of the filter function to be applied by the adaptable filter 44.

The signal processing is based on a channel transfer function, which defines the spectral transmission through a transmission channel of the transmission infrastructure 48, wherein the transmission channel is used for transmitting the adapted transmission signal from the transmitter to the receiver. The channel transfer function or one or more of other equivalent quantities, which can be derived from the channel transfer function, are determined by the controller 56.

In the communication system 36 the channel transfer function TCH is obtained by the controller 56 from the spectrum TX1 of the transmission signal being generated in the before mentioned initial system setting and from the spectrum RX of this transmission signal after it has been transmitted through and may have been modified by the transmission infrastructure 48 and before demodulation. The channel transfer function can be obtained based on the following formula:

$$TCH(F) = RX(F) / TX0(F)$$

While "f" is used for frequencies in the base-band, "F" is used to designate frequencies in the optical or RF domain. In the embodiment of FIG. 4 the optical or RF spectra RX(F) and TX0(F) are measured by the first spectrum analyzer 54 and by the second spectrum analyzer 46, respectively. The measured spectra are provided by the respective spectrum analyzers 54, 46 to the controller 56.

The spectrum analyzers 46, 54 can be configured to measure spectral magnitudes only. In this case the obtained channel transfer function TCH is a function with real values.

In some embodiments phase information is included by measuring phase characteristics for filtering elements and transmission media such as optical fibers upfront, for example by using vector analyzers. In this case a complex channel transfer function TCH can be obtained, which may provide information about the influence of the transmission via transmission infrastructure 48 both on the magnitude and the phase of the signal.

Fig. 7 illustrates a communication system 136 according an alternative embodiment, which differs from the communication system 36, in that it does not comprise the second spectrum analyzer 46. In this embodiment 136 the controller 56 determines the spectrum TX0 or TX1 of the transmission signal generated in the initial system setting based on input parameters provided by the digital source 38, the converter 40 and the modulator 42. These parameters can include the symbol rate $F_{sym}$ of each multiplex component, the initial carrier frequency $F_0$, information about the pulse shaping including the before mentioned roll-off factor r being applied by the converter 40. Based on these input parameters also TX0 or TX1 can be determined, without having a second spectrum analyzer 46. Typically and preferably the imaginary part is zero and/or can be assumed to be zero. However, TX0 or TX1 can also be determined as complex function, in some embodiments.

In order to determine a complex spectrum RX, also additional information about the transmission infrastructure 48, such as information about the influence on the signal phase, e.g. by an optical fiber, can be used. This additional phase information can allow determining the spectrum RX as complex function, even if the first spectrum analyzer 54 is not capable of measuring a signal phase.

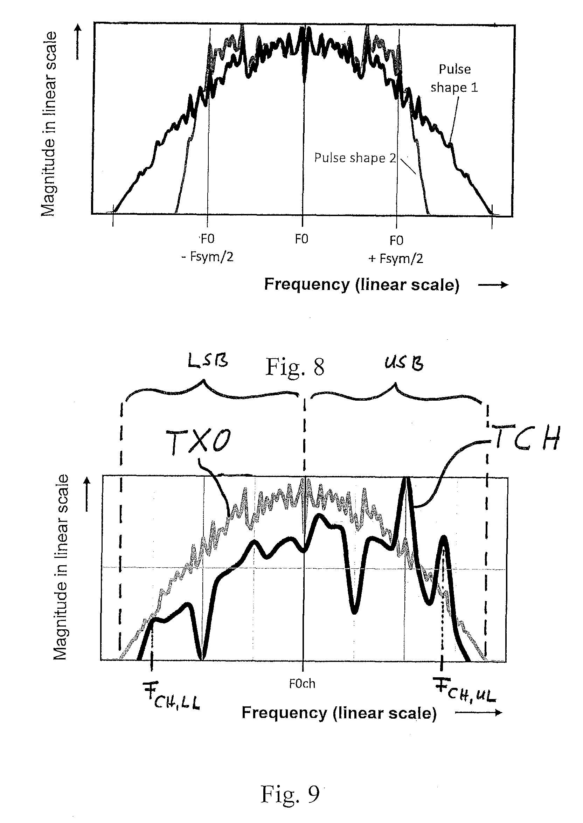

Fig. 8 illustrates the effect of applying different pulse shaping parameters which may result in different modulated carrier signals, one having a comparatively broad spectrum TX0 ("pulse shape 1 ") and the other having a comparatively narrow spectrum TX0 ("pulse shape 2").

Fig. 9 illustrates an example for the magnitude of a channel transfer function TCH which has been obtained by the illustrated measured spectrum TX0 of a double side-band modulated transmission signal generated in the initial system setting and by a corresponding spectrum RX (not shown in FIG. 9) after transmission through the transmission infrastructure 48.

In the example of FIG. 9 the bandwidth of the transmission channel, which ranges from a lower channel frequency limit $F_{CH,LL}$ to an upper channel frequency limit $F_{CH,UL}$, is smaller than an initial signal bandwidth corresponding to the spectral width of LSB plus the USB of the spectrum TX0. Because the initial carrier frequency $F_0$ and the center frequency $F_{0CH}$ of the transmission channel coincide, some frequencies of the USB and of the LSB of the transmission signal are filtered out by the transmission channel.

In the embodiment of FIG. 9 the spectral range of the transmission channel is defined by the channel frequency limits frequency limits $F_{CH,LL}$ and $F_{CH,UL}$, which can be obtained by the controller from the channel transfer function TCH, e.g. by determining the first local maxima at the edges of the channel transfer function TCH, as indicated in FIG. 9. In other embodiments the channel frequency limits can be differently defined, e.g. as first frequencies from the upper and lower edge of the TCH, where the TCH has a value of 40% of its maximum value. In these embodiments the channel frequency limits correspond to physical limits or boundaries beyond which a signal cannot be transmitted with sufficient intensity.

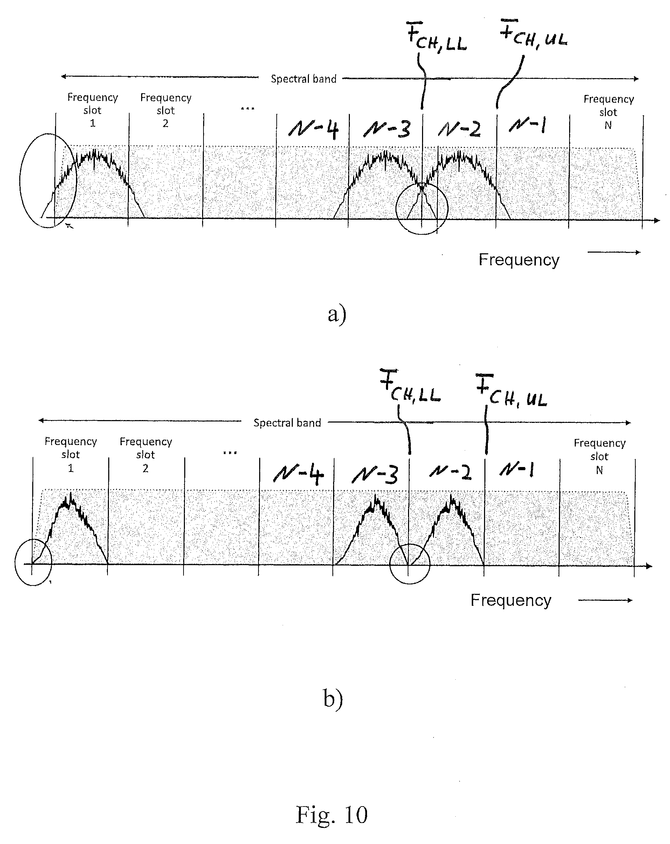

Figures 10 a) and 10b) illustrate another example of transmission channels, which correspond to frequency slots within a larger spectrum band or so called "media channel", wherein these transmission channels are defined by selected channel frequency limits, such as $F_{CH,LL}$ and $F_{CH,UL}$ for the illustrated frequency slot N-2. In this case the channel frequency limits $F_{CH,LL}$, $F_{CH,UL}$ can be provided to the controller 56 as predefined frequency positions and must not be determined by the controller based on the channel transfer function TCH.

Further it is possible that only one of both channel frequency limits corresponds to a physical limit, wherein the other channel frequency limit can be a predefined frequency. This is illustrated by frequency slot 1 in FIG. 10.

For the purpose of the present invention, the spectral width of the transmission channel which is used for transmitting the adapted transmission signal is higher than or equal to $F_{sym}/2$ and lower than twice the bandwidth of the positive part of the base-band spectrum. Because the channel bandwidth is higher than or equal to $F_{sym}/2$, the complete information of the base-band, which is included both in the USB and in the LSB of the corresponding conventional double side-band modulated carrier signal, can be transmitted, if the carrier frequency is correctly adjusted to a suitable $F_{0\_new}$ with respect to the spectral position of the transmission channel. Because the bandwidth of the used channel is lower than the bandwidth $2F_{BB,max}$ of the base-band spectrum, the channel is narrower as compared to channels for transmitting both the complete USB and the complete LSB. This allows to save bandwidth and to make the transmission more efficient.

It is noted that the spectral range of the transmission channel, for which the channel transfer function TCH is obtained and which falls within the above-mentioned range, can be predefined as illustrated in FIG. 10.

Alternatively, the spectral range of the transmission channel can be determined based on the channel transfer function TCH after the channel transfer function has been obtained, as is illustrated in FIG. 9. If in this alternative case the determined spectral range of the transmission channel should be equal or larger than the bandwidth of the base-band spectrum, a new value for one or both determined channel frequency limits can be defined to define a new transmission channel with a bandwidth smaller than the bandwidth of the base-band spectrum. This allows using the remaining available bandwidth for transmitting additional information of other signals.

Based on the channel frequency limits $F_{CH,LL}$, $F_{CH,UL}$ - which can be predefined or determined from the channel transfer function - the controller determines or selects a value for an adapted carrier frequency $F_{0\_new}$ which is located between $F_{CH,LL}$ and $F_{CH,UL}$ and which is spaced from one of $F_{CH,LL}$ and $F_{CH, UL}$ at least by $F_{sym}/2$. This is equivalent with the condition, that at least a spectral width of $F_{sym}/2$ of the USB or of the LSB is located between $F_{CH,LL}$ and $F_{CH,UL}$. This allows transmitting the complete information of the digital data signal through the corresponding transmission channel.

It is noted that, while the shape of the filter function for the adaptable filter 44 is necessarily determined based on the channel transfer function, the value of $F_{0\_new}$ must not necessarily be determined or selected based on the channel transfer function, but can be determined or selected based thereon.

Preferably $F_{0\_new}$ is determined or selected, such that one of the USB and LSB is completely arranged within the transmission channel, if the transmission channel has a bandwidth being equal to or larger than $F_{BB,max}$. Hence, in these embodiments frequency $F_{0\_new}$ is spaced from one of $F_{CH,LL}$ and $F_{CH, UL}$ at least by $F_{BB,max}$, wherein $F_{BB,max}$ is larger than $F_{sym}/2$. This allows for a more robust transmission, for the preferred case that the base-band spectrum is larger than $F_{sym}/2$.

In some embodiments $F_{BB,max}$ corresponds to $2F_{sym}/3$ and $F_{0\_new}$ is spaced from one of $F_{CH,LL}$ and $F_{CH, UL}$ by $F_{BB,max}$ and is spaced from the other of $F_{CH,LL}$ and $F_{CH, UL}$ by about $F_{sym}/6$. These embodiments allow for both a very efficient and robust transmission.

Further, the controller 56 is preferably configured to determine or select the value of $F_{0\_new}$ in in dependency of the form of TCH and at a frequency position outside a slope region of the TCH, such that the carrier frequency $F_{0\_new}$ is not or not essentially influenced or damped during transmission due to a low transmittance value at the edge of the TCH profile, which allows for a better demodulation.

After the $F_{0\_new}$ has been determined the setting of the tunable local oscillator is controlled by the controller 56 to correspond to an adapted setting, in which the tunable local oscillator generates a carrier signal at $F_{0\_new}$.

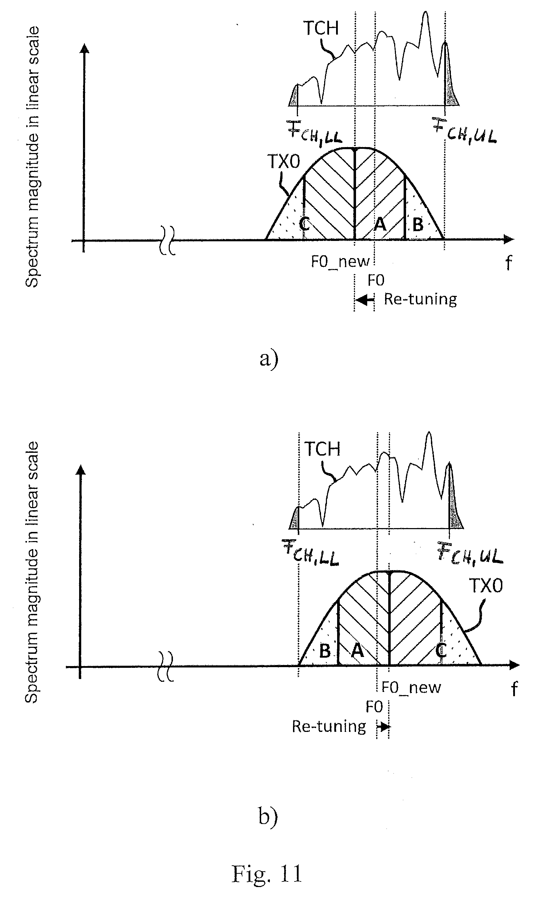

Figs. 11 a) and b) illustrate examples for retuning the tunable local oscillator from an initial carrier frequency $F_0$ located in the center of the transmission channel to an adapted carrier frequency $F_{0\_new}$ within the transmission channel, such that the complete USB (Fig. 11 a)) or the complete LSB (Fig. 11 b)) is arranged between the channel frequency limits $F_{CH,LL}$, $F_{CH,UL}$.

FILTER FUNCTION

In the following it is explained, how the filter function, which allows for low or zero ISI, when it is applied by the adaptable filter 44 in order to perform a signal processing according to the present invention, can be determined.

In the communication system 36 of FIG. 4 the transmitted transmission signal is coherently demodulated by demodulator 50 into a demodulated analog base-band signal, wherein the optical or RF spectrum RX is shifted back to the base-band.

In embodiments, which use QAM signals, the demodulator 50 delivers demodulated I- and Q-components in which each of both may contain a mix of the original I- and Q-components of the transmitted signal. The converter 52 is capable of SSB or VSB demodulation and hence of separating the original I- and Q-components from the mix. This ensures, that a full signal and data recovery at the receiver is possible despite a loss of orthogonality between Q- and I-components due to the spectral shaping, in particular due to using a channel bandwidth below $2F_{BB,max}$.

In some embodiments, QAM is applied with trellis coded modulation (TCM). Such embodiments preferably further comprise a Viterbi decoder.

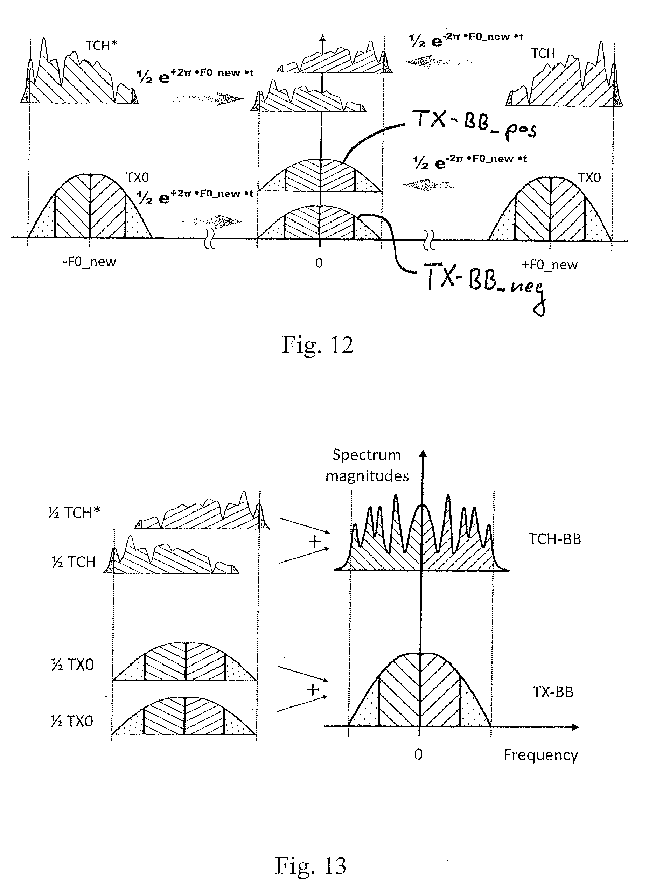

The demodulation process is illustrated in FIG. 12 for a system setting, in which the carrier frequency has already been adjusted to $F_{0\_new}$ and in which a filter function is not yet applied by the adaptable filter 44, such that TX0 and TX1 can still be identical. The RF or optical spectrum of the transmitted signal is given by

$$RX(F) = TX1(F) \cdot TCH(F).$$

Similar to the amplitude modulation at the transmitter, the coherent demodulation and the receiver corresponds to a multiplication with a local oscillator signal, e.g. with a sine signal and/or a cosine signal. In FIG. 12 the influence of the signal multiplication performed by the demodulator 50 is illustrated separately for the first above term TX1(F) (corresponding to TX0(F) case of no filtering) and for the second above term TCH(F).

Influence on TX0:

Demodulation, e.g. multiplication with $\cos(2\pi \cdot F_{0\_new} \cdot t)$, shifts the signal TX0 back to the base-band. The multiplication also yields spectral components (no shown) at twice the carrier frequency $F_{0\_new}$. However, these components are irrelevant as demodulated signals, they are preferably removed by filtering and are therefore neglected. Instead the focus is on the demodulated components in the base-band around the frequency f=0.

Demodulation to the base-band around f=0 may be realized by homodyne demodulation or by heterodyne demodulation which includes an additional step of mixing to an intermediate frequency (IF).

Shifting the positive and negative component of TX0 back to the base-band yields TX-BB. Without considering the influence of TCH, the demodulated signal is a superposition of the positive and negative frequency component:

$$RX\text{-}BB = \tfrac{1}{2}\,(TX\text{-}BB\_neg \; + \; TX\text{-}BB\_pos)$$

Fig. 12 illustrates that both components are equal, resulting in RX-BB = TX-BB. This is plausible as we have ignored the impact of the transmission channel so far. In other words, without considering the influence of TCH modulation and demodulation delivers the signal TX-BB at the receiver side exactly as it was transmitted.

Influence on TCH:

Shifting the channel transfer function to the base-band yields a different result than shifting a modulated signal. The channel transfer function TCH(F) does not comprise the same symmetry as modulated signals. Most obvious in FIG. 12 is the asymmetry of the TCH magnitude around $\pm$F0new. The transfer function TCH appears in the base-band as:

$$\text{TCH}_{BB}(f) = \frac{1}{2}(\text{TCH}^*(F0_{new} - f) + \text{TCH}(F0_{new} + f)) \quad \text{Eq. (I)}$$

For positive values of f the frequency $F0_{new}$ - f relates to a lower side band frequency $F_{LSB}$ and $F0_{new}$ + f relates to an upper side band frequency $F_{USB}$. In Eq. (I) * designates the complex conjugate and f designates any frequency in the base-band, while the before mentioned frequencies $F_{LSB}$ and $F_{USB}$ stand for frequencies in the RF, optical or digital subscriber line frequency range.

Fig. 13 illustrates how both the channel transfer function TCH and the signal spectrum TX0 appear after conversion to the base-band. In these terms, under consideration of the influence of the channel transfer function TCH the calculation formula for the spectrum RX-BB of the demodulated analog signal is

$$\text{RX} - \text{BB}(f) = \text{TX} - \text{BB}(f) \cdot \frac{1}{2}(\text{TCH}^*(F0_{new} - f) + \text{TCH}(F0_{new} + f))$$

The channel transfer function TCH above does not yet include a filter function OF-TX to be applied by the adaptable filter 44. However, the filter function OF-TX can be treated as a part of the channel transfer function TCH. The equation below includes the influence of a filter function OF-TX to be applied by the adaptable filter 44.

$$\text{RX} - \text{BB}(f) = \text{TX} - \text{BB}(f) \cdot \frac{1}{2} \cdot (\text{OF} - \text{TX}^*(F0_{new} - f) \cdot \text{TCH}^*(F0_{new} - f) + \text{OF} -$$

$$\text{TX}(F0_{new} - f) \cdot \text{TCH}(F0_{new} + f)) \quad \text{Eq. (II)}$$

It is noted that, while "OF" designates "optical filter" the above formula applies in the same way for a signal processing in the RF domain, which is also comprised by the present invention.

Since the modulation and therefore of the corresponding demodulation is known and since further the spectrum TX0 is known, e.g. from calculation or from measurement as explained before, it is possible to determine for a desired spectrum RX-BB of a demodulated analog base-band signal to be obtained after demodulation a corresponding a filter function OF-TX, wherein this corresponding filter function OF-TX(F) can be determined based on the channel transfer function TCH according to Eq. (II).

SYMMETRY FOR ZERO ISI

In order to obtain zero ISI for a purely real spectrum it is desired and required that the positive part of the real part of the base-band spectrum RX-BB(f) after demodulation has a central symmetry with respect to the spectrum point at the frequency of half the symbol rate $F_{sym}/2$. In order to obtain zero ISI for a complex spectrum additionally having a frequency dependent imaginary part it is additionally desired and required that the positive part of the imaginary part of the base-band spectrum RX-BB(f) after demodulation has an axial symmetry with respect to the spectrum point at the frequency of half the symbol rate $F_{sym}/2$. However, since in some embodiments the imaginary part is small compared to the real part, it can be sufficient to fulfill or approximately fulfill the symmetry requirements for the real part only, but not for the imaginary part.

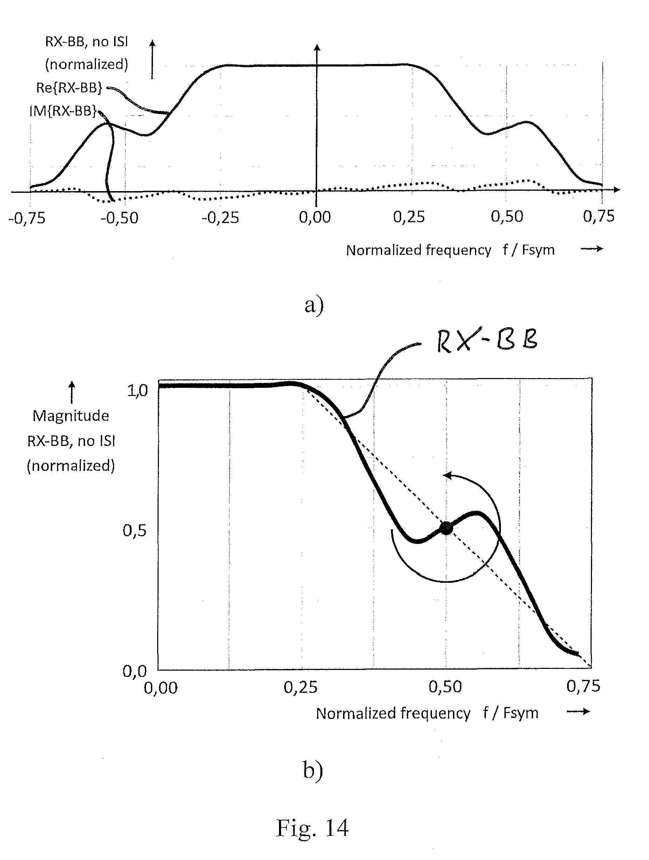

An example of a base-band spectrum RX-BB, fulfilling this symmetry requirement is illustrated in FIG. 14 a). FIG. 14 b) shows the magnitude of the positive portion of the base-band spectrum RX-BB of FIG. 14 a). As the imaginary part is small compared to the real part, the magnitude spectrum almost equals the real part. Therefore, almost zero or at least approximately zero ISI can be achieved, even if the positive part of the imaginary part of the base-band spectrum RX-BB(f) after demodulation does not have an axial symmetry with respect to the frequency of half the symbol rate $F_{sym}/2$.

As illustrated in FIG. 14 b), if the positive portion of the base-band spectrum RX-BB is rotated by 180° around the spectrum point at $F_{sym}/2$ the positive portion of the base-band spectrum RX BB is transformed in itself.

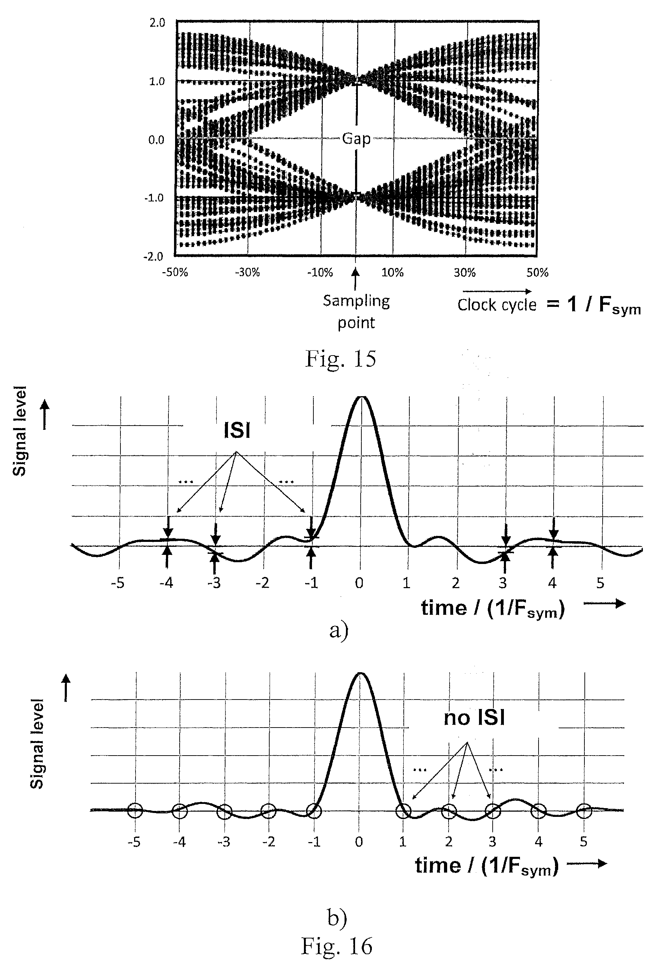

This symmetry implies zero ISI, as illustrated in the below explained eye pattern of FIG. 15, which will be explained in further detail with reference to FIGS. 16 a) and b).

FIG. 16 a) shows an impulse response function outputted by the demodulator 50 for an input pulse, i.e. a pulse being non-zero at time t=0 and being zero at any other point in time. Due to transmission via the transmission infrastructure 48 and the influence of the TCH the shape of this pulse changes in the time domain and intensity is spread in time. As a result, a certain intensity is falsely detected at sampling points different from the sampling point corresponding to t=0. Accordingly, due to non-zero sampling values at sampling points left and right from the sampling point at t=0, the transmission corresponding to the impulse response function of FIG. 16 a) is not free of ISI and can cause bit errors in the received digital data signal 34.

In contrast, the impulse response function of FIG. 16 b) only differs at sampling point t=0 from zero, and corresponds to zero at all other sampling points. This property is equivalent with zero ISI. This "zero-ISI property" is preserved for other impulse response functions or demodulated signals which can be derived from multiplying the impulse response function of FIG. 16 b) with any deliberate function. In the frequency domain, which is obtained by performing a Fourier transformation of the signal in the time domain, zero ISI is equivalent to the symmetry of FIG. 14 b). This symmetry in the frequency domain is preserved when performing a convolution - corresponding to a multiplication in the time domain - with any deliberate function. Therefore, any demodulated analog signal having a base-band spectrum RX-BB with the symmetry of FIG. 14 b) can be sampled without degradation due to ISI and can allow receiving a digital data without bit errors.

FIG. 15 illustrates an eye pattern of a demodulated signal having the base-band spectrum RX-BB of FIG. 14. In contrast to the signal corresponding to the eye pattern of FIG. 2, the signal corresponding to the eye pattern of FIG. 15 is free of ISI. As shown in FIG. 15, at each sampling point exactly one out of two defined values, which do not fluctuate in in intensity over time, is measured.

LINEAR PROGRAMMING

In a preferred embodiment the filter function to be applied by the adaptable filter 44 in order to obtain a spectrum RX-BB which has the required symmetry for zero ISI is determined by linear programming.

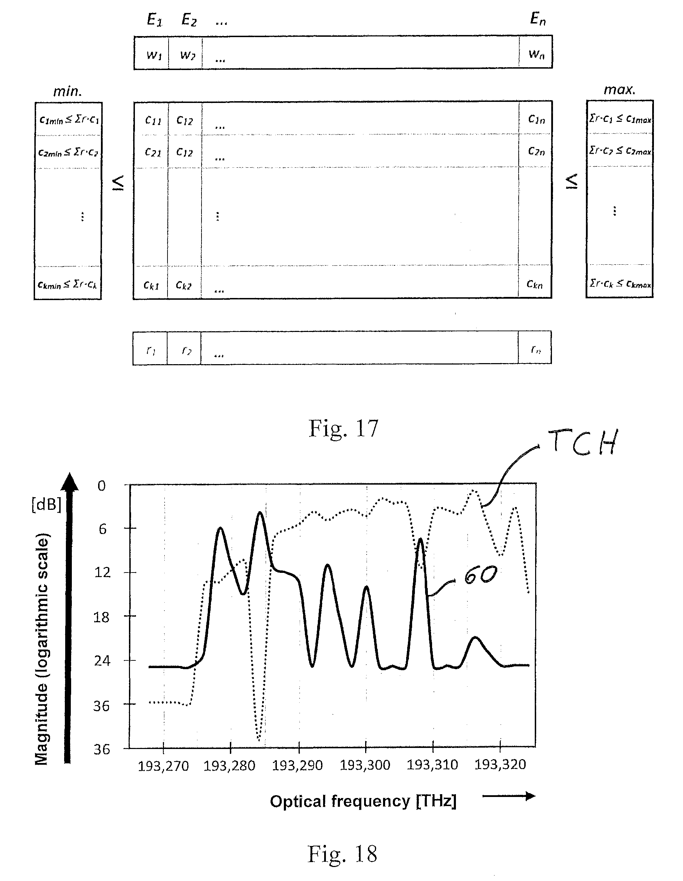

FIG. 17 shows the structure of the variables for the optimization model in its standard format. The variables $E_1, E_2 ... E_n$ represent the spectrum values at several frequency points i = 1, ..., n within the spectral range defined by the lower and upper channel frequency limits $F_{CH,LL}$ and $F_{CH,UL}$.

In a preferred embodiment of a linear programming model, the coefficients $r_1, r_2 ... r_n$ represent magnitude values of the identified optimal filter function OF_TX of the adaptable filter 44 at the frequency points i=1, ..., n, i.e. after optimization

$$r_i = OF\_TX_{i,optimal}.$$

The linear programming process varies the variables $r_1, r_2 ... r_n$ until an optimal solution is found.

The optimal solution of this embodiment is characterized by maximal power of the received signal RX, as indicated in sufficient accuracy by the sum over all the received signal magnitudes $RX_i$ at each frequency point i.

Maximal received signal power typically corresponds to minimal degradation by amplifier noise and hence to a maximal signal to noise ratio. The received signal magnitude at a frequency point i is given by the product of the transmitted signal magnitude $TX0_i$, the transfer function magnitude of the transmission infrastructure $TCH_i$ and the transfer function magnitude of the filter $OF\_TX_i$.

$$RX_i = TX0_i \cdot TCH_i \cdot OF\_TX_i$$

As the linear programming model of this embodiment represents the magnitudes $OF\_TX_i$ by the variables $r_i$, the coefficients $w_1, w_2 ... w_n$ are given by the product

$$w_i = TX0_i \cdot TCH_i.$$

With that, it is an objective in some embodiments to maximize the sum

$$\sum_{i=1}^{n} r_i \cdot w_i = maximum$$

by varying the variable values $r_i$.

Referring to FIG. 17 the coefficients $c_{11}$, $c_{12}$, ... $c_{1n}$, $c_{21}$, ... $c_{2n}$, ..., $c_{k1}$, ..., $c_{kn}$ are used to formulate a total number of k constraints of the optimization. Constraints are, for example, the zero-ISI criterion and technical limitations of realistic adaptable filtering elements 44, such as maximum and minimum damping capabilities.

The zero-ISI constraint can equivalently be formulated by central symmetry of the positive portion of the real part of the received demodulated signal (RX_BB) to the frequency of half the symbol rate. As obvious from FIG. 14 b), central symmetry of the real part can be expressed as

$$Re\{RX\_BB(Fsym/2 + f)\} + Re\{RX\_BB(Fsym/2 - f)\} = 2\, Re\{RX\_BB(Fsym/2)\}$$

With respect to the imaginary part the desired axial symmetry can be expressed by

$$Im\{RX\_BB(Fsym/2 + f)\} = Im\{RX\_BB(Fsym/2 - f)\}$$

In a normalized way, the symmetry constraint for the real part can be expressed as

$$\frac{Re\{RX\_BB(Fsym/2 + f)\}}{2\, Re\{RX\_BB(Fsym/2)\}} + \frac{Re\{RX\_BB(Fsym/2 - f)\}}{2\, Re\{RX\_BB(Fsym/2)\}} = 1$$

With the previously introduced Eq. (II)

$$RX\_BB(F) = \tfrac{1}{2}\, TX0(F+F0_{new}) \cdot TCH(F+F0_{new}) \cdot OF\_TX(F+F0_{new})$$

$$+ \tfrac{1}{2}\, TX0(F-F0_{new}) \cdot TCH^*(F-F0_{new}) \cdot OF\_TX^*(F-F0_{new})$$

where the base-band frequency F can be represented by

$$F = Fsym/2 + f$$

the constraint "central symmetry of the real part for zero ISI" can be expressed by

$$1 = \tfrac{1}{4} \cdot a \cdot Re\{TX0_{-s-i} \cdot TCH_{-s-i} \cdot r_{-s-i} + TX0_{-s+i} \cdot TCH_{-s+i} \cdot r_{-s+i}\}$$

$$+ \tfrac{1}{4} \cdot a \cdot Re\{TX0_{s-i} \cdot TCH_{s-i} \cdot r_{s-i} + TX0_{s+i} \cdot TCH_{s+i} \cdot r_{s+i}\}$$

where "s" represents the frequency point index at Fsym/2 and "a" stands for

$$a = 1 / (2 \cdot TX0_s \cdot TCH_s \cdot r_s).$$

With that, the constraint "central symmetry" of the real part can be given in the below illustated matrix representation, where the factors $TX0_i \cdot TCH_i$ are indicated by the coefficients $c_{ji}$ with j = 1, ..., k =4. Empty cells contain the value 0.

| $\leq$ | $E_1$ | $E_2$ | $E_3$ | $E_4$ | $E_5$ | $E_6$ | $E_7$ | $E_8$ | $E_9$ | $\leq$ |
|--------|-------|-------|-------|-------|-------|-------|-------|-------|-------|--------|
| 1 |  | $c_{12}$ |  |  |  |  |  | $c_{18}$ |  | 1 |
| 1 | $c_{21}$ |  | $c_{23}$ |  |  |  | $c_{27}$ |  | $c_{29}$ | 1 |
| 1 |  |  |  | $c_{34}$ |  | $C_{36}$ |  |  |  | 1 |
| 0,5 |  |  |  |  | $c_{45}$ |  |  |  |  | 0,5 |

Each row of the matrix shall be read as a sumproduct

$$c_{j,min} \leq \sum_{i=1}^{n} r_i \cdot c_{ji} \leq c_{j,max} \quad , \forall j$$

Therein index j designates the j$^{th}$ constraint being formulated in the j$^{th}$ row. The first constraint in the first above row says: The coefficient $c_{12}$ multiplied with the magnitude of the filter spectrum value $r_2$ of the adaptable filter 44 at the frequency point 2 plus the coefficient $c_{18}$ multiplied with the filter spectrum value $r_8$ at the frequency point 8, must be equal to 1, i.e.

$$1 \leq c_{12} \cdot r_2 + c_{18} \cdot r_8 \leq 1 \quad \Leftrightarrow \quad c_{12} \cdot r_2 + c_{18} \cdot r_8 = 1$$

The coefficients $c_{12}$ and $c_{18}$ are a product of the magnitude of the transmission spectrum TX0 at frequency points 2 and 8, respectively, the corresponding magnitude spectrum values of TCH at frequency points 2 and 8, and the corresponding normalization factor a, i.e.

$$c_{12} = TX0_2 \cdot TCH_2 \cdot a$$

$$c_{18} = TX0_8 \cdot TCH_8 \cdot a$$

The constraint in the last row, i.e.

$$c_{45} = TX0_5 \cdot TCH_5 \cdot a = 0,5$$

formulates the requirement at the frequency i = 5 which corresponds $F_{sym}/2$.
The matrix shows the ISI constraints in the standard format of linear programming. Typically, constraints allow for results in a range between a minimum and a maximum value. However, the zero-ISI constraint is given by an equation that requires an exact value and not a range. In order to follow the unified format of standardized optimization models for any constraint, equations like

$$expression = 1$$

are formulated as

$$1 \leq expression \leq 1$$

In another embodiment in which remaining ISI is accepted, the spectral symmetry constraints look as shown below:

17

| $\leq$ | $E_1$ | $E_2$ | $E_3$ | $E_4$ | $E_5$ | $E_6$ | $E_7$ | $E_8$ | $E_9$ | $\leq$ |
|---|---|---|---|---|---|---|---|---|---|---|
| 0,98 | | $c_{12}$ | | | | | | $c_{18}$ | | 1,02 |
| 0,98 | $c_{21}$ | | $c_{23}$ | | | | $c_{27}$ | | $c_{29}$ | 1,02 |
| 0,98 | | | | $c_{34}$ | | $c_{36}$ | | | | 1,02 |
| 0,49 | | | | | $c_{45}$ | | | | | 0,51 |

In embodiments in which the phase characteristics of the channel transfer function are neglected, the real part of the received signal approximately equals its magnitude.

In other embodiments in which phase information is relevant, a set of constraints can be established for the additional criterion "axial symmetry of the imaginary part with respect to the frequency point at Fsym/2 for zero ISI". This can be done in an a way analogous to the before mentioned explanation.

The requirement of a central symmetry with respect $F_{sym}/2$ is preferably achieved at least for the positive real part of RX-BB. In some embodiments the requirement "axial symmetry of the positive imaginary part of RX-BB with respect $F_{sym}/2$" is additionally achieved, in case of a complex spectrum RX-BB.

The present invention also comprises embodiments, in which the signal processing at the transmitter leads to a stronger central symmetry of the positive real part of the received demodulated base-band spectrum with respect to the spectrum point at the frequency of half the symbol rate ($F_{sym}/2$) but not necessarily to a central symmetry. This must not completely suppress ISI but can sufficiently reduce ISI.

"Stronger" central symmetric can in particular mean the following: Any real function y(x), can be separated into an even part $y_{even}(x)$ and an odd part $y_{odd}(x)$. Correspondingly, the positive real part of the received demodulated base-band spectrum can be separated into a central symmetric part with respect to the spectrum point at the frequency of half the symbol rate ($F_{sym}/2$) and an axial symmetric part with respect to the spectrum point at the frequency of half the symbol rate ($F_{sym}/2$). The higher the before mentioned integrated central symmetric part as compared to the before mentioned integrated axial symmetric part, the stronger is the central symmetry of the positive real part of the received demodulated base-band spectrum.

In the present disclosure the terms "even" and "odd" or "central symmetric" and "axial symmetric" can in particular mean the following:

Let y(x) be a real mathematical function, where real means comprising non-complex values only. y(x) may represent a time function, a spectrum magnitude, a spectral phase characteristic, the real part of a spectrum, the imaginary part of a spectrum etc.

y(x) is even or axial symmetric to the axis x=X at position x , if it is mirror-symmetric to that axis, i.e. fulfilling the condition

$$y(X+x) = y(X-x)$$

A function y(x) is odd or central symmetric to a point (X, y=a) on the axis x=X, if it is rotational symmetric to that point, i.e. fulfilling the condition

$$y(X+x) - a \quad = \quad -y(X-x) + a$$

In some embodiments the filter function to be applied by the adaptable filter 44 can be determined based on further constraints in order to obtain one or more of the following characteristics:

1. Maximum signal power after demodulation under the condition that all other constraints are satisfied.

2. Zero intensity or at least zero intensity of TX1 outside the spectral range of the transmission channel in order to reduce degradation due to crosstalk with neighboring signals.

3. A lower damping or filtering of weaker frequencies or of all frequencies experiencing a higher damping during transmission. This corresponds to a pre-emphasis for equalizing spectral intensity fluctuations within the spectral range of the transmission channel. This can allow for a better data recovery at the receiver and can contribute to further reduce signal degradation.

4. Better practical implementation by taking into account technical filter limitations. This allows applying the filtering for one or more of the above mentioned requirements either in the RF or optical domain (as in the communication system 36 of FIG. 4) and/or in the electrical domain before modulation (as will be explained in further detail further below). For example, the above characteristic 2 is preferably achieved by a filtering of blocking in the optical or RF domain, while a filtering for achieving a desired symmetry in a phase of RX-BB is preferably performed in the electrical range before modulation at the transmitter.

The above characteristic 1 ensures that the determined filter function does not remove more signal intensity than necessary in order to obtain the required symmetry for zero ISI. This additional constraint can be included in the calculation by the following additional requirement:

$$\sum_{i=1}^{n} r_i \cdot w_i = maximum$$

This allows for an optimal signal to noise ratio.

The second above characteristic 2 allows reducing degradation due to crosstalk with neighboring signals. This is illustrated by FIG. 10: In FIG. 10 a) the transmission signals in channels N-2 and N-3 interfere and have not been processed according to characteristic 2, such that each of these signals is degraded due to intensity of the other signal. A respective filtering outside the respective transmission channel allows obtaining corresponding spectra as illustrated in FIG. 10 b), which are not degraded due to crosstalk.

The following table illustrates the implementation of a technical limitation according to characteristic 4, i.e. the filter is capable of filtering out up to 99% of the signal at any frequency point. 1% always passes. Also, the filter has a minimum damping factor of 20% at any frequency point i = 1, ..., 9. A maximum of 80% of the signal passes.

| $\leq$ | $E_1$ | $E_2$ | $E_3$ | $E_4$ | $E_5$ | $E_6$ | $E_7$ | $E_8$ | $E_9$ | $\leq$ |
|---|---|---|---|---|---|---|---|---|---|---|
| 0,01 | 1 | | | | | | | | | 0,8 |
| 0,01 | | 1 | | | | | | | | 0,8 |
| ... | | | | | ... | | | | | ... |
| 0,01 | | | | | | | | | 1 | 0,8 |

Correspondingly, constraints can be formulated for the above characteristics 2, 3 and other technical limitations according to characteristic 4, such that the corresponding filter function can be determined by linear programming.

FIG. 18 illustrates a filter function 60 to be applied by the adaptable filter 44, which has been determined based on the channel transfer function TCH and which allows obtaining zero or essentially zero ISI, when converting the demodulated analog signal into a received digital data signal. In FIG. 18 the channel transfer function TCH and the filter function 60 are illustrated - different from the previous illustrations - not in the linear scale that in the logarithmic scale.

It is noted, that linear programming is only one option for determining a filter function based on the above mentioned constraints or requirements. In other embodiments, the filter function 60 can be determined differently, such as by use of analytical calculations, by "Nonlinear programming" also known as "NLP" or by any other dedicated software solution.

In further embodiments, the filter curve or function identified by linear programming can be adapted further by approximation to match the filtering capabilities of real filter components beyond the capabilities of linear programming.

BASE-BAND FILTERING

Further, the filtering must not necessarily be performed after modulation but can also be additionally or alternatively performed before modulation in the electrical domain.

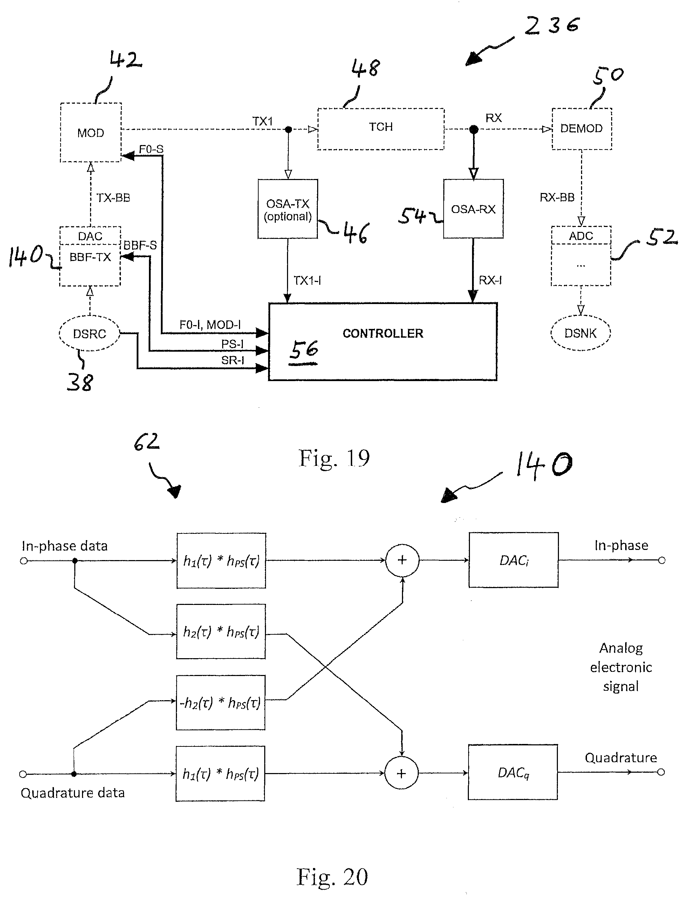

FIG. 19 illustrates a communication system 236 according to another embodiment of the present invention which differs from the embodiments 36 and 136 in that it does not comprise an adaptable filter 44 in the RF or optical domain downstream the modulator 42. In this embodiment 236 the controller 56 controls a converter 140 for performing a signal processing in the electrical domain corresponding to the application of the filter function 60 by the adaptable filter 44 in the RF or optical domain.

In the communication system 236 the modulation corresponds to a QAM, such that the analog modulation signal comprises an in-phase component and a quadrature component. The filtering is performed by a base-band filter 62 of the converter 140. The base-band filter 62 is illustrated in FIG. 20.

The base-band filter 62 applies a first and a second transfer function $H_1(f)$ and $H_2(f)$ both to the I-component and to the Q-component. In FIG. 20 the filter functions $H_1(f)$ and $H_2(f)$ are represented by their corresponding impulse responses $h_1(\tau)$ and $h_2(\tau)$, which can be obtained by a Fourier transformation. Accordingly, $h_1(\tau)$ and $h_2(\tau)$ represent the optical or RF filter function 60 in the time domain and in the base-band.

The base-band filter 62 combines in-phase data and quadrature data to new in-phase data and new quadrature data, as illustrated by the "crossover" or "butterfly structure" in FIG. 20. Due to the combination of in-phase data and quadrature data by the "crossover" blocks $H_1(f)$, $H_2(f)$, a spectrum TX0 can be received which is asymmetric to the carrier frequency $F_{0\_new}$. This is different from conventional amplitude modulation and from the before explained operation in the initial system setting, where the USB and LSB have the same spectral width and are symmetric with respect to each other and are symmetrically arranged on different sides of the carrier frequency $F_0$ or $F_{0\_new}$.

The converter 140 comprises digital-to-analog converters DACi and DACq for converting the digitally filtered data to analog electronic signals. They are subject to QAM modulation by the modulator 42.

In preferred embodiments the base-band filter 62 combines the filtering by $H_1(f)$ and $H_2(f)$ (or by $h_1(\tau)$ and $h_2(\tau)$) with pulse shaping, as indicated by the impulse response $h_{ps}(\tau)$. Therein " * " denotes "convolution". In other embodiments no additional pulse shaping is performed by the base-band filter 62. The spectral impact of pulse shaping alone is shown in FIG. 8.

The transfer functions $H_1(f)$ and $H_2(f)$ to be applied by the base-band filter 62 can be obtained by converting the filter function 60 which has been determined for the application by the adaptable filter 44 in the optical or RF domain to the base-band.

The following steps can be used to calculate the impulse responses of all four filter blocks of the base-band filter 62:

1. Shifting the filter function 60 which has been determined for the optical or RF domain to the base-band by the new carrier frequency $F_{0\_new}$ similar to the visualization in FIG. 13 for the demodulation process:

$$H(f) = \frac{1}{2}(OF\_TX^*(F0_{new} - f) + OF\_TX(F0_{new} + f))$$

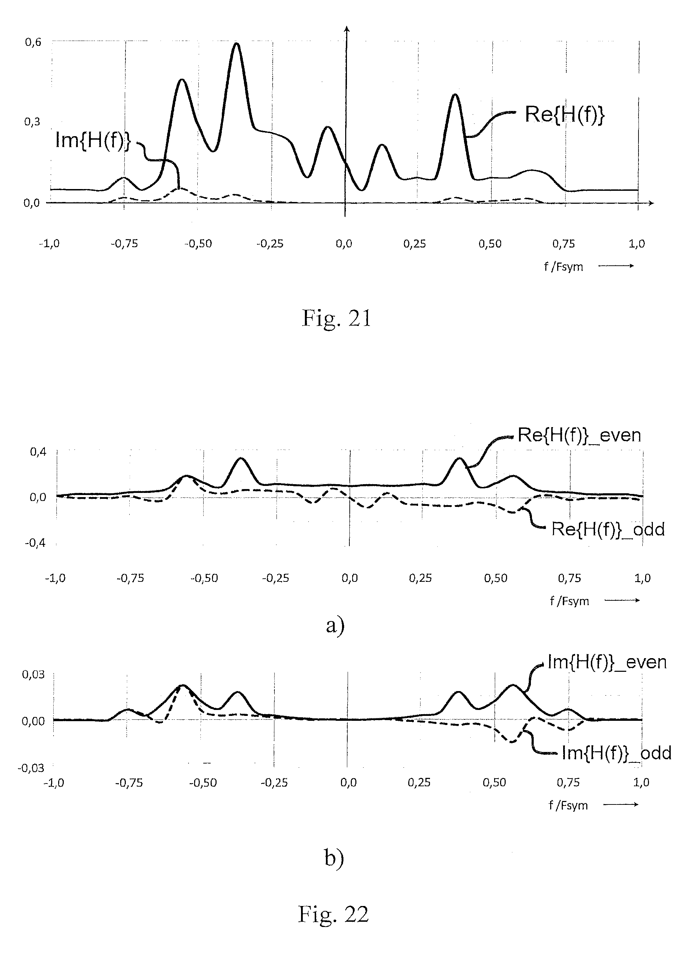

This results in a transfer function H(f), wherein H(f) typically corresponds to a complex impulse response $h(\tau)$ with a real part and an imaginary part. FIG. 21 illustrates a complex transfer function H(f) obtained by applying the above equation, i.e. by applying Eq. (I) to a complex filter function OF_TX(F) having the same magnitude as filter function 60 of FIG. 18 in order to shift the filter function OF_TX(F) by the carrier frequency $F_{0\_new}$ to the base-band.

2. Separation of H(f) into two transfer functions $H_1(f)$ and $H_2(f)$ so that the impulse responses $h_1(\tau)$ and $h_2(\tau)$ or a combination of both are real numbers. The shifted transfer function H(F) is asymmetric to the frequency axis f=0. That means: The resulting impulse response $h(\tau)$ of H(f) is complex comprising real and imaginary values. Impulse responses of real signals require a transfer function with an even real part to the frequency f=0 and with an odd imaginary part to the axis origin (0,0).

FIG. 22 illustrates the decomposition into even and odd portions of H(f), wherein FIG. 22 a) illustrates the even part Re{H(f)}_even (solid line) and the odd part Re{H(f)}_odd (dashed line) of the real part Re{H(f)}of H(F) and wherein FIG. 22 b) illustrates the even part Im{H(f)}_even (solid line) and the odd part Im{H(f)}_odd (dashed line) of the imaginary part Im{H(f)} of H(f).

The four parts are combined to transfer functions $H_1(f)$ and $H_2(f)$ in which the real parts are even and the imaginary parts are odd. An example is the following determination of the transfer functions $H_1(f)$ and $H_2(f)$:

$$H_1(f) = Re\{H(f)\}\_even + i \, Re\{H(f)\}\_odd$$

$$H_2(f) = Im\{H(f)\}\_even + i \, Im\{H(f)\}\_odd$$

The corresponding impulse responses $h_1(\tau)$ and $h_2(\tau)$ are real functions without imaginary parts.

After shifting $H_1(f)$ into the optical domain by the in-phase modulating component of modulator 42 with the carrier $\cos(2\pi.F0\_new.1)$, and $H_2(f)$ by the quadrature modulating component of modulator 42 with the carrier sin(2π.F0_new.t), the result equals the corresponding or equivalent filter function of OF-TX.

It is noted that there are also numerous other sets of transfer functions $H_1(f)$ and $H_2(f)$ which fulfill the condition "$h_1(\tau)$ and $h_2(\tau)$ are real numbers" and which correspond to the same transfer function of the filter OF-TX in the optical or RF domain, but which differ from the above specific examples for $H_1(f)$ and $H_2(f)$ and which may also depend on the specific arrangement of the QAM modulator.

3. Preferably multiplying each transfer function $H_1(f)$ and $H_2(f)$ by the transfer function of a desired pulse shape $H_{PS}(f)$.

When performing an inverse Fourier transform of the impulse responses $h_1(\tau)$ and $h_2(\tau)$ or - in case of additional pulse shaping - of $h_1(\tau)*h_{PS}(\tau)$ and $h_2(\tau)*h_{PS}(\tau)$ the result represents the settings of the base-band filter 62 in the frequency domain. These settings are applied by the base-band filter 62 and are controlled by the controller 56 for achieving or contributing to achieve zero ISI.

The present invention has been described in detail with respect to illustrative embodiments and examples. However, the scope of the present invention is not limited to the described examples but is determined by the scope of the appended claims. It is noted that different examples and embodiments of the present invention which have not been described in detail may contain one or more of the described features in different combinations. For example, the present invention also comprises embodiment which combine a filtering in the RF or optical range with a filtering in the electrical range before modulation.

If the filtering is performed only in the electrical domain, the channel transfer function can be determined both based on a measurement of the spectrum at the transmitter side and on a calculation of this spectrum.

The present invention can apply for transmission systems for digital data, applying

- amplitude modulation (for digital data also known as amplitude shift keying "ASK"),

- and potentially applying multiplexing, such as phase multiplexing, polarization multiplexing and frequency or wavelength multiplexing,

- and potentially modulation of multiple bits as a single digital symbol in one step,

- and applying coherent demodulation, capable of processing vestigial side band (VSB) and/or quadrature VSB (QVSB) modulated signals.

Transmission systems can be optical systems, radio or microwave systems, but also other systems that fulfill the characteristics directly or in a hidden manner, such as digital subscriber line (DSL) systems.

Phase multiplexing turns an amplitude modulated (AM) signal into a quadrature amplitude modulated (QAM) signal by demultiplexing a first portion of the digital symbol for modulation onto a cosine carrier (in-phase component) and the remaining portion for modulation onto its orthogonal sine carrier of the same frequency (quadrature component). It is noted with respect to further aspects in the description that often, QAM is just perceived as a modulation technique while the phase multiplexing aspect is ignored or taken for granted. The present disclosure distinguishes between modulation and multiplexing aspects.

Frequency multiplexing or, in optical systems, wavelength division multiplexing results in co-propagation of multiple transmission signals over the same transmission infrastructure. Signals in such transmission systems may be subject of crosstalk.

Examples of modulation of multiple bits in one step are 2ASK and 4ASK. If a symbol comprises one bit, the amplitude modulated signal has 2 different amplitude values (2ASK). If a symbol comprises two bits, the modulated signal has 4 different amplitude values (4ASK). It is noted that ASK modulation rarely occurs in contemporary systems without phase multiplexing. Typical applications are 2ASK-modulated in-phase and quadrature components, resulting in a 4QAM signal and 4ASK-modulated in-phase and quadrature components, resulting in a 16QAM signal.

In optical systems, dispersion agnostic signal recovery (at least to some degree) is an indicator for VSB/QVSB processing capability.

LIST OF REFERENCE SIGNS:

| 10 | communication system |
| 12 | digital source |
| 14 | digital data signal |
| 16 | transmitter |

| 18 | transmission signal |
| 20 | converter |
| 22 | modulator |
| 24, 124 | analog modulation signal |
| 26 | transmission infrastructure |
| 28 | receiver |
| 30 | demodulator |
| 32 | converter |
| 34 | received digital data signal. |
| 36, 136, 236 | communication system |
| 38 | digital source |
| 40, 140 | converter |
| 42 | modulator |
| 44 | adaptable RF or optical filter |
| 46 | a second spectrum analyzer |
| 48 | transmission infrastructure |
| 50 | demodulator |
| 52 | converter |
| 54 | first spectrum analyzer |
| 56 | controller |
| 58 | transmitted adapted transmission signal |
| 60 | filter function |
| 62 | base-band filter |

**Claims**

1. Method for generating an adapted transmission signal to be transmitted in a communication system (36, 136, 236) from a transmitter to a receiver via a transmission channel, wherein the transmission channel has a lower and an upper channel frequency limit ($F_{CH,LL}$ and $F_{CH,UL}$) defining a channel bandwidth, wherein the method comprises the following steps:

   - providing a digital data signal with an associated symbol rate ($F_{sym}$),
   - converting the digital data signal into an analog modulation signal with a base-band spectrum,
   - providing the analog modulation signal to a modulator (42) for modulating the amplitude of a carrier signal to generate a transmission signal at the transmitter, wherein the transmission signal has at least an upper side-band carrying the information of the base-band spectrum or has at least a lower side-band carrying the information of the base-band spectrum,
   - obtaining a channel transfer function (TCH) defining the spectral transmission through the transmission channel between the lower and the upper channel frequency limits ($F_{CH,LL}$, $F_{CH,UL}$), wherein the channel bandwidth is higher than or equal to the frequency of half the symbol rate ($F_{sym}/2$),
   - performing a signal processing at the transmitter based on the channel transfer function (TCH) to provide an adapted transmission signal having a transmission spectrum with an adapted shape and with an adapted spectral position with respect to the transmission channel, such that

      • after transmission of the adapted transmission signal via the transmission channel and after demodulation of the transmitted adapted transmission signal, a signal with a base-band spectrum (RX-BB) is received, wherein

         o the positive part of the base-band spectrum (RX-BB) of the received signal is located in a frequency range between zero and the symbol rate ($F_{sym}$) and
         o the positive part of a real part of the base-band spectrum of the received signal is stronger central symmetric with respect to the spectrum point at the frequency of half the symbol rate ($F_{sym}/2$) than without performing said signal processing, and such that

      • at least a spectral width of half the symbol rate ($F_{sym}/2$) of the upper side-band and the carrier frequency of the carrier signal are located between the upper and lower channel frequency limit ($F_{CH,LL}$, $F_{CH,UL}$) or at least a spectral width of half the symbol rate ($F_{sym}/2$) of the lower side-band and the carrier frequency of the carrier signal are located between the upper and lower channel frequency limit ($F_{CH,LL}$, $F_{CH,UL}$).

2. Method of claim 1, wherein said the positive part of a real part of the base-band spectrum of the received signal has a central symmetry or at least approximately a central symmetry with respect to the spectrum point at the frequency of half the symbol rate ($F_{sym}/2$), and/or
wherein the channel bandwidth is lower than twice the bandwidth of the positive part of the base-band spectrum of the analog modulation signal, and/or
wherein the base-band spectrum of the received signal has a real part only or has both a real part and an imaginary part, wherein preferably said signal processing is further performed, such that that the positive part of the imaginary part of the base-band spectrum is has at least approximately an axial symmetry with respect to the spectrum point at the frequency of half the symbol rate ($F_{sym}/2$), and/or
wherein performing a signal processing comprises blocking or at least damping frequencies outside the spectral range of the transmission channel.

3. Method of one of the preceding claims, wherein performing a signal processing at the transmitter comprises

- adjusting the carrier frequency to an adapted carrier frequency ($F_{0\_new}$), such that at least a spectral range of the upper side-band with a width of half the symbol rate ($F_{sym}/2$) and the adapted carrier frequency ($F_{0\_new}$) or at least a spectral range of the lower side-band with a width of half the symbol rate ($F_{sym}/2$) and the adapted carrier frequency ($F_{0\_new}$) are located between the upper and the lower channel frequency limit ($F_{CH,LL}$, $F_{CH,UL}$), wherein preferably adjusting the carrier frequency comprises tuning the carrier frequency from an initial carrier frequency ($F_0$) within the transmission channel to an adapted carrier frequency ($F_{0\_new}$) within the transmission channel,
wherein preferably the initial carrier frequency ($F_0$) is arranged in the center of the transmission channel and/or wherein the adapted carrier frequency ($F_{0\_new}$) is located closer to one of the channel frequency limits ($F_{CH,LL}$, $F_{CH,UL}$) than to the center frequency of the transmission channel.

4. Method of one of the preceding claims, wherein the upper and/or the lower channel frequency limit ($F_{CH,LL}$, $F_{CH,UL}$) are predefined spectral positions defining a limit of an allocated frequency slot within a larger transmission spectrum and/or correspond to an edge of a transmission spectrum beyond which the spectral transmission is zero or decreases to zero, and/or
wherein the adapted transmission signal is an optical signal, a radio frequency signal or a signal from a digital subscriber line system, and/or
wherein the channel transfer function (TCH) is obtained based on

- generating an amplitude modulated carrier signal having a spectrum covering at least the spectral range of the transmission channel,
- transmitting or partially transmitting the amplitude modulated carrier signal via the transmission channel,
- measuring the spectrum of the signal portion transmitted via the transmission channel, and
- obtaining a signal spectrum before transmission at the transmitter side,
and/or
wherein the signal spectrum before transmission at the transmitter side is obtained by measuring or by a calculation from input parameters.

5. Method of one of the preceding claims, wherein the signal processing comprises frequency selective damping after modulation in the spectral range of the transmission channel, which results after transmission and demodulation

- to an at least approximately central symmetry in the positive part of the real part of the received base-band spectrum (RX-BB) or
- to an at least approximately central symmetry in the positive part of the real part of the received base-band spectrum and to an at least approximately axial symmetry in the positive part of the imaginary part of the received base-band spectrum,
wherein preferably the frequency selective damping includes applying a filter function (60), which is determined based on the channel transfer function (TCH), wherein the filter function (60) is preferably applied by use of an adaptable filter (44), such as a configurable RF filter or an optical filter, such as a wavelength selective switch which supports flexible DWDM grid functionality.

6. Method of one of claims 1 to 4, wherein the spectrum shape of the adapted transmission signal in the spectral range of the transmission channel is generated by applying a filter function (H$_1$(f), H$_2$(f)) before modulation.

7. Method of one of the preceding claims, wherein the complete spectral range of the upper side-band or the complete spectral range of the lower side-band is located between the upper and the lower channel frequency limit (F$_{CH,LL}$, F$_{CH,UL}$), and/or the channel bandwidth is lower than 75% of the symbol rate (F$_{sym}$), and/or further comprising

- demodulating the transmitted data modulated carrier signal to provide an analog demodulated signal with a base-band spectrum, and/or
- converting the demodulated signal into a received digital signal by using a sampling with the symbol rate (F$_{sym}$).

8. Method of one of the preceding claims, wherein modulating comprises QAM.

9. Method of claim 7 or 8, wherein demodulating is performed by use of a QVSB receiver.

10. Method of claim 8 or 9, wherein QAM is applied in combination with trellis coded modulation (TCM), wherein preferably the receiver comprises a Viterbi decoder.

11. Method of one of the preceding claims, wherein the signal processing further comprises applying a spectral filter function or frequency dependent amplification which compensates for differences in the spectral transmission through the transmission channel.

12. Communication system (36, 136, 236) for generating an adapted transmission signal, comprising

- a converter (40, 140) for converting a digital data signal with an associated symbol rate (F$_{sym}$) into an analog modulation signal with a base-band spectrum,
- a transmission infrastructure (48) connecting a transmitter and a receiver comprising a transmission channel with a lower and an upper channel frequency limit (F$_{CH,LL}$, F$_{CH,UL}$) defining a channel bandwidth, wherein the channel bandwidth is higher than or equal to the frequency of half the symbol rate (F$_{sym}$/2),
- a tunable local oscillator for providing a carrier signal,
- a modulator (42) for modulating the amplitude of the carrier signal to provide a transmission signal,
- an adaptable filter (44; 62) being arranged upstream of the transmission infrastructure (48) for applying a filter function (60; H$_1$(f), H$_2$(f)),
- a controller (56) configured for

- determining a channel transfer function (TCH) defining the spectral transmission through the transmission channel between the lower and the upper channel frequency limit (F$_{CH,LL}$, F$_{CH,UL}$) based on information received from downstream and from upstream of the transmission infrastructure (48),
- determining an adapted carrier frequency (F$_{0\_new}$) and a filter function based on the channel transfer function (TCH),
- controlling the adaptable filter (44; 62) to apply the determined filter function (60; H$_1$(f), H$_2$(f)) and for controlling the tunable local oscillator to generate a carrier signal with the adapted carrier frequency (F$_{0\_new}$), such that downstream of the modulator (42) an adapted transmission signal is generated, wherein the adapted transmission signal has a transmission spectrum with an adapted shape and with an adapted spectral position with respect to the transmission channel, such that

• after transmission of the adapted transmission signal via the transmission channel and after a demodulation of the transmitted adapted transmission signal, a signal with a base-band spectrum is received, wherein

o the positive part of the received base-band spectrum is located in a frequency range between zero and the symbol rate (F$_{sym}$) and
o the positive part of a real part of the base-band spectrum of the received signal is stronger central symmetric with respect to the spectrum point at the frequency of half the symbol rate (F$_{sym}$/2) than without applying apply the determined filter function (60; H$_1$(f), H$_2$(f)), and such that

• at least a spectral width of half the symbol rate (F$_{sym}$/2) of the upper side-band and the carrier frequency (F$_{0\_new}$) of the carrier signal are located between the upper and lower channel frequency limit (F$_{CH,LL}$,

$F_{CH,UL}$) or
at least a spectral width of half the symbol rate ($F_{sym}$/2) of the lower side-band and the carrier frequency ($F_{0\_new}$) of the carrier signal are located between the upper and lower channel frequency limit ($F_{CH,LL}$, $F_{CH,UL}$).

13. Communication system (36, 136, 236) of claim 12, wherein the adaptable filter (44) is implemented in the RF, optical or digital subscriber line frequency domain and arranged downstream of the modulator (42) and/or wherein the adaptable filter (62) is implemented in the electrical domain and arranged upstream of the modulator (42), and/or further comprising a first spectrum analyzer (54) arranged downstream of the transmission channel for providing spectral information to the controller (56).

14. Communication system (36, 136, 236) of claim 12 or 13, further comprising a second spectrum analyzer (46) arranged upstream of the transmission channel for providing spectral information to the controller (56), wherein preferably the spectral information provided by one or both of the first and second spectrum analyzers (54, 46) corresponds or encodes a magnitude value per frequency, or
wherein the controller (56) is connected to a digital source (38), to the converter (40, 140) and to the modulator (42) for receiving input parameters allowing to determine a signal spectrum (TX0) upstream of the transmission infrastructure (48).

15. Communication system (36, 136, 236) of one of claims 12 to 14, configured for performing a method of one of claims 1 to 11.

Fig. 1

Fig. 2

Fig. 3

Fig. 4

Range C ———————— Range A ——— Range B ⊣

-Fsym/2   0   +Fsym/2   $\mp F_{BB,max}$

Frequency (linear scale) ⟶

a)

TX-BB
(linear scale)

⊢— Range A ——— Range B ⊣

0   Fsym/2   $\mp F_{BB,max}$

Frequency (linear scale) ⟶

b)

Fig. 5

Fig. 6

Fig. 7

Fig. 8

Fig. 9

a)

b)

Fig. 10

a)

b)

Fig. 11

TCH*

$\frac{1}{2}\ e^{+2\pi \cdot F0\_new \cdot t}$

$\frac{1}{2}\ e^{-2\pi \cdot F0\_new \cdot t}$

TCH

TX-BB_pos

$\frac{1}{2}\ e^{-2\pi \cdot F0\_new \cdot t}$

TX0

$\frac{1}{2}\ e^{+2\pi \cdot F0\_new \cdot t}$

TX0

-F0_new

0

+F0_new

TX-BB_neg

Fig. 12

Spectrum magnitudes

½ TCH*

½ TCH

TCH-BB

½ TX0

½ TX0

TX-BB

0    Frequency

Fig. 13

a)

b)

Fig. 14

Fig. 15

a)

b)

Fig. 16

$E_1$ $E_2$ ... $E_n$

| $w_1$ | $w_2$ | ... | $w_n$ |

*min.* *max.*

| $c_{1min} \leq \Sigma r \cdot c_1$ |
| $c_{2min} \leq \Sigma r \cdot c_2$ |
| : |
| $c_{kmin} \leq \Sigma r \cdot c_k$ |

$\leq$

| $c_{11}$ | $c_{12}$ | ... | $c_{1n}$ |
| $c_{21}$ | $c_{12}$ | ... | $c_{2n}$ |
| | : | | |
| $c_{k1}$ | $c_{k2}$ | ... | $c_{kn}$ |

$\leq$

| $\Sigma r \cdot c_1 \leq c_{1max}$ |
| $\Sigma r \cdot c_2 \leq c_{2max}$ |
| : |
| $\Sigma r \cdot c_k \leq c_{kmax}$ |

| $r_1$ | $r_2$ | ... | $r_n$ |

Fig. 17

Fig. 18

*236*

*42* *48* *50*

Fig. 19

*62* *140*

Fig. 20

Fig. 21

a)

b)

Fig. 22

Europäisches
Patentamt

European
Patent Office

Office européen
des brevets

## EUROPEAN SEARCH REPORT

Application Number

EP 16 18 8800

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 680 519 A1 (NXP BV [NL]) 1 January 2014 (2014-01-01) * paragraphs [0002] - [0007], [0013], [0046]; figure 11a * ----- | 1-15 | INV. H04L25/03 H04L27/02 H04L27/34 |
| X | US 2004/174937 A1 (UNGERBOECK GOTTFRIED [CH]) 9 September 2004 (2004-09-09) * abstract; figures 2-7 * ----- | 1-15 | |

TECHNICAL FIELDS
SEARCHED    (IPC)

H04L

The present search report has been drawn up for all claims

| Place of search | Date of completion of the search | Examiner |
|---|---|---|
| Munich | 16 March 2017 | Vucic, Jelena |

EPO FORM 1503 03.82 (P04C01)

## ANNEX TO THE EUROPEAN SEARCH REPORT
## ON EUROPEAN PATENT APPLICATION NO.

EP 16 18 8800

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2017

| Patent document cited in search report | | Publication date | Patent family member(s) | | Publication date |
|---|---|---|---|---|---|
| EP 2680519 | A1 | 01-01-2014 | CN | 103516651 A | 15-01-2014 |
| | | | EP | 2680519 A1 | 01-01-2014 |
| | | | US | 2014003484 A1 | 02-01-2014 |
| US 2004174937 | A1 | 09-09-2004 | EP | 1458156 A2 | 15-09-2004 |
| | | | US | 2004174937 A1 | 09-09-2004 |

EPO FORM P0459

For more details about this annex : see Official Journal of the European Patent Office, No. 12/82